# EUROPEAN PATENT APPLICATION

(11) **EP 3 951 682 A1**
(43) Date of publication of application: **09.02.2022**
(21) Application number: 20782162.0
(22) Date of filing: 26.02.2020
(51) Int. Cl.: G06Q 10/08, G06Q 50/06

(54) **INFORMATION PROCESSING DEVICE, INFORMATION PROCESSING METHOD, AND PROGRAM**

(30) Priority: 29.03.2019 JP 2019065428
(71) Applicant: Nippon Gas Co., Ltd., Tokyo 151-8582 (JP)
(72) Inventor: WADA, Shinji, Tokyo 151-8582 (JP)
(74) Representative: Betten & Resch
(86) International application number: PCT/JP2020/007676
(87) International publication number: WO 2020/202915

(57) **Abstract**

Conventionally, it is not possible to acquire presence-in-residence information regarding the presence in the residence of an inhabitant, based on an LPG use status. It is possible to acquire presence-in-residence information regarding the presence in the residence of an inhabitant, based on an LPG use status, using an information processing apparatus including: a gas information storage unit that stores two or more pieces of gas information that include gas use information that is gas use information for two or more days and is associated with time information that specifies a time, in association with a customer identifier that identifies a customer; a customer identifier acceptance unit that accepts a customer identifier; a gas use information acquisition unit that acquires pieces of gas use information as of two or more points in time, paired with the customer identifier accepted by the customer identifier acceptance unit, from the gas information storage unit; a presence-in-residence information acquisition unit that acquires presence-in-residence information regarding whether or not an inhabitant in a household that is identified by the customer identifier accepted by the customer identifier acceptance unit is present in the residence, using the pieces of gas use information as of two or more points in time acquired by the gas use information acquisition unit; and a presence-in-residence information output unit that outputs the presence-in-residence information acquired by the presence-in-residence information acquisition unit.

## Description

### Technical field

The present invention relates to, for example, information processing apparatus that acquires and outputs information regarding a customer's presence in a residence, using information regarding the use of gas.

### Background Art

There is a conventional technology for estimating a presence-in-residence probability of each user in each time zone based on the history of position information collected from terminal apparatuses (see Patent Document 1).

### Citation List

### Patent Document

Patent Document 1: JP 2018-156495A

### Summary of Invention

### Technical Problem

However, according to the conventional technology, it is only estimated whether or not each individual is present in their residence according to the position where the individual is present, and it is not possible to acquire presence-in-residence information regarding the presence in a residence of a household that includes a plurality of family members, from a gas use status, for example.

### Solution to Problem

An information processing apparatus according to a first aspect of the present invention is an information processing apparatus including: a gas information storage unit that stores two or more pieces of gas information that include gas use information that is gas use information for two or more days and is associated with time information that specifies a time, in association with a customer identifier that identifies a customer; a customer identifier acceptance unit that accepts a customer identifier; a gas use information acquisition unit that acquires pieces of gas use information as of two or more points in time, paired with the customer identifier accepted by the customer identifier acceptance unit, from the gas information storage unit; a presence-in-residence information acquisition unit that acquires presence-in-residence information regarding whether or not an inhabitant in a household that is identified by the customer identifier accepted by the customer identifier acceptance unit is present in the residence, using the pieces of gas use information as of two or more points in time acquired by the gas use information acquisition unit; and a presence-in-residence information output unit that outputs the presence-in-residence information acquired by the presence-in-residence information acquisition unit.

With such a configuration, it is possible to acquire presence-in-residence information regarding the presence in the residence of an inhabitant, based on an LPG use status.

An information processing apparatus according to a second aspect of the present invention is the information processing apparatus according to the first aspect of the invention, wherein the presence-in-residence information acquisition unit acquires presence-in-residence information that is a presence-in-residence score regarding the degree of presence in a residence, using the pieces of gas use information as of two or more points in time acquired by the gas use information acquisition unit, according to an amount of gas used indicated by gas use information per unit time for two or more days.

With such a configuration, it is possible to grasp the inhabitant's stay status, based on an LPG use status.

An information processing apparatus according to a third aspect of the present invention is the information processing apparatus according to the second aspect of the invention, wherein the gas use information acquisition unit acquires, from the gas information storage unit, target gas use information that is gas use information that is paired with the customer identifier accepted by the customer identifier acceptance unit, and is gas use information for each target period that is a day of the week, or a time zone, or a day of the week and a time zone for which presence-in-residence information is to be output, and the presence-in-residence information acquisition unit acquires presence-in-residence information that indicates a stay probability of an inhabitant for each target period, using the target gas use information acquired by the gas use information acquisition unit.

With such a configuration, it is possible to precisely grasp the inhabitant's stay status in details, based on an LPG use status.

An information processing apparatus according to a fourth aspect of the present invention is the information processing apparatus according to the first aspect of the invention, wherein, using the pieces of gas use information as of two or more points in time acquired by the gas use information acquisition unit, the presence-in-residence information acquisition unit determines that the inhabitant is present in the residence in a time zone in which the amount of gas used indicated by the pieces of gas use information regarding each of the two or more days is large enough to satisfy a predetermined condition, determines that the inhabitant is not present in the residence in a time zone in which the amount of gas used indicated by the pieces of gas use information regarding each of the two or more days is small enough to satisfy a predetermined condition, and acquires presence-in-residence information that is a stay determination result that is the result of determination.

With such a configuration, it is possible to grasp the inhabitant's stay status, based on an LPG use status.

An information processing apparatus according to a fifth aspect of the present invention is the information processing apparatus according to any one of the first to fourth aspects of the invention, wherein the gas information storage unit stores two or more pieces of gas information that contain gas use information for each day of the week and each time zone, for two or more weeks, the presence-in-residence information acquisition unit acquires presence-in-residence information for each day of the week and each time zone, using the gas use information for each day of the week and each time zone, and the presence-in-residence information output unit outputs presence-in-residence information for each day of the week and each time zone.

With such a configuration, it is possible to grasp the inhabitant's stay status in details, based on an LPG use status.

An information processing apparatus according to a sixth aspect of the present invention is the information processing apparatus according to any one of the first to fifth aspects of the invention, further including: a gas information reception unit that receives gas information from a gas information transmission apparatus that includes: a terminal acquisition unit that acquires gas information that is information that contains gas use information regarding use of gas in an LPG cylinder and corresponds to a customer identifier; and a terminal transmission unit that transmits the gas information acquired by the terminal acquisition unit to the information processing apparatus; and a gas information accumulation unit that accumulates the gas information received by the gas information reception unit, in the gas information storage unit, in association with the time information and the customer identifier.

With such a configuration, it is easier to collect gas information regarding customers.

### Advantageous Effects of Invention

According to the information processing apparatus according to the present invention, it is possible to acquire presence-in-residence information regarding the presence of an inhabitant in the resident, using an LPG use status.

### Brief Description of Drawings

FIG. 1 is a conceptual diagram for an information system A according to Embodiment 1.
FIG. 2 is a block diagram for the information system A according to the same.
FIG. 3 is a block diagram for an information processing apparatus A2 according to the same.
FIG. 4 is a flowchart illustrating examples of operations that are performed by a gas information transmission apparatus A1 according to the same.
FIG. 5 is a flowchart illustrating examples of operations that are performed by an information processing apparatus A2 according to the same.
FIG. 6 is a flowchart illustrating examples of operations that are performed by a next deliverer terminal A3 according to the same.
FIG. 7 is a flowchart illustrating examples of operations that are performed by a facility terminal A4 according to the same.
FIG. 8 is a conceptual diagram for the information system A according to the same.
FIG. 9 is a conceptual diagram for an information system E according to Embodiment 2.
FIG. 10 is a block diagram for the information system E according to the same.
FIG. 11 is a diagram illustrating a concept of an example of presence-in-residence information acquisition processing according to the same.
FIG. 12 is a flowchart illustrating an example of presence-in-residence information acquisition processing that is performed by an information processing apparatus E2 according to the same.
FIG. 13 is a flowchart illustrating a first example of presence-in-residence information acquisition processing according to the same.
FIG. 14 is a flowchart illustrating a second example of presence-in-residence information acquisition processing according to the same.
FIG. 15 is an overview diagram for a computer system according to the above embodiments.
FIG. 16 is a block diagram for the computer system according to the same.

### Description of Embodiments

The following describes embodiments of information system and so on with reference to the drawings. Note that the components with the same reference numerals in the embodiments perform the same operations, and therefore redundant descriptions thereof may be omitted.

### Embodiment 1

The present embodiment describes an information system that includes one or more gas information transmission apparatuses that acquire and transmit gas information that includes information regarding the use of gas in one or more LPG cylinders, and information processing apparatus.

In addition, the present embodiment describes an information system that includes a gas information transmission apparatus that transmits two or more pieces of gas information all at once. Note that the gas information transmission apparatus acquires gas use information described later, once an hour, and transmits the gas use information for one day, to the information processing apparatus, once a day, for example. Note that the gas information transmission apparatus may acquires the gas use information described later once an hour, and separately transmits the gas use information for one day, to the information processing apparatus, twice a day or more, for example.

Furthermore, the present embodiment describes an information system that includes an information processing apparatus that also receives delivery cylinder information described later, delivery vehicle position information described later, climate information described later, and cylinder replacement information described later.

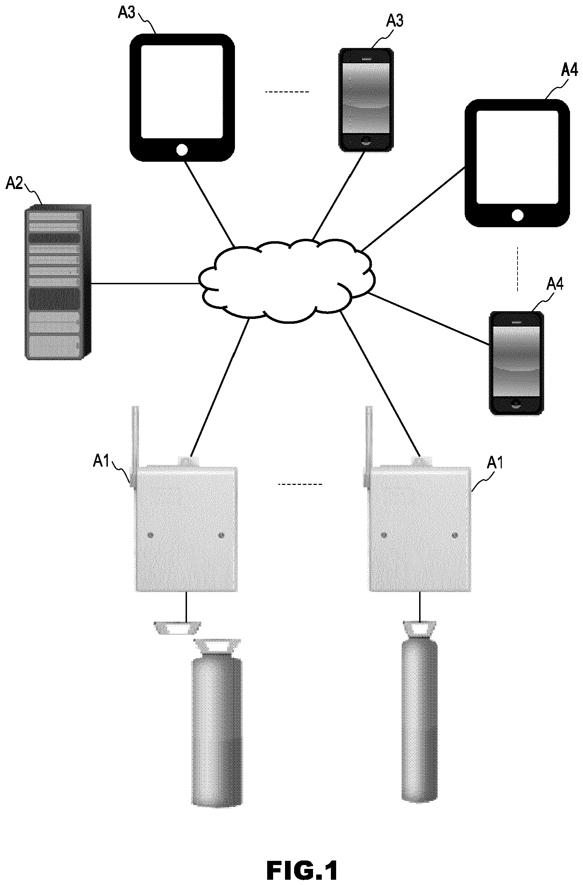

FIG. 1 is a conceptual diagram for an information system A according to the present embodiment. The information system A includes one or more gas information transmission apparatuses A1, an information processing apparatus A2, one or more deliverer terminals A3, and one or more facility terminals A4.

Gas information transmission apparatuses A1 are apparatuses that acquire gas information that includes gas use information, and transmit the gas information to the information processing apparatus A2. The gas information transmission apparatus A1 need only have a communication function, and the type thereof is not limited.

The information processing apparatus A2 is a server apparatus that receives and accumulates information such as gas information. "Information such as gas information" may be gas information alone, or one or more pieces of information of: delivery cylinder information described later; delivery vehicle position information described later; cylinder replacement information described later; and climate information may be used in addition to gas information. The information processing apparatus A2 can be realized using a so-called cloud server or an ASP server, but there is no limitation on the type thereof.

The deliverer terminals A3 are terminals that are used by deliverers. However, the deliverer terminals A3 may be terminals that are mounted on delivery vehicles. The deliverer terminals A3 are, for example, smartphones, tablet terminals, so-called personal computers, or the like, but there is no limitation on the type thereof. The deliverer terminals A3 have a communication function.

The facility terminals A4 are terminals that are present in the facility. The facility terminals A4 are, for example, smartphones, tablet terminals, so-called personal computers, or the like, but there is no limitation on the type thereof. The facility terminals A4 have a communication function. The facility is, for example, a factory or a depot station. A factory is a facility for filling gas cylinders with gas. A depot station is a facility where gas cylinders are placed.

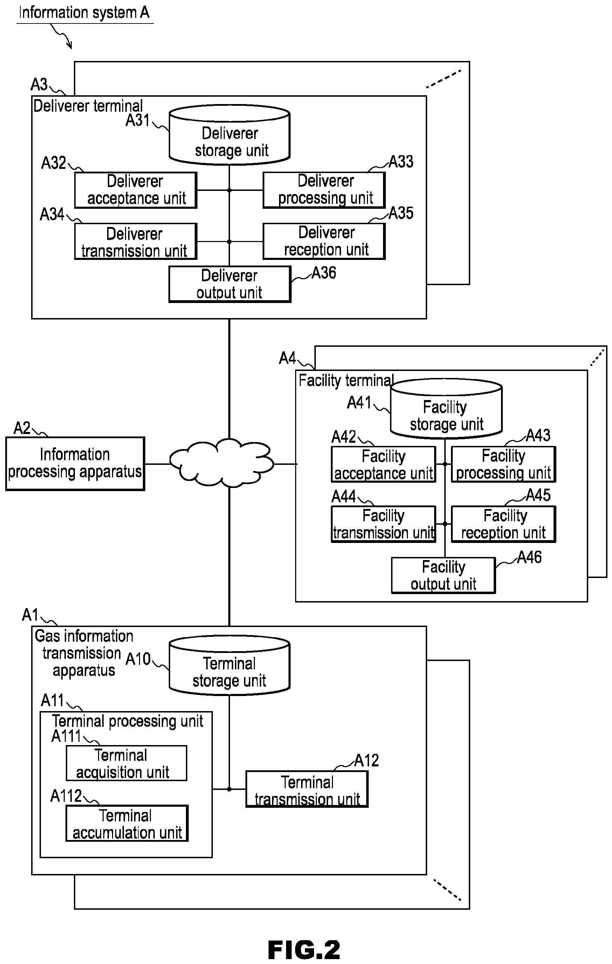

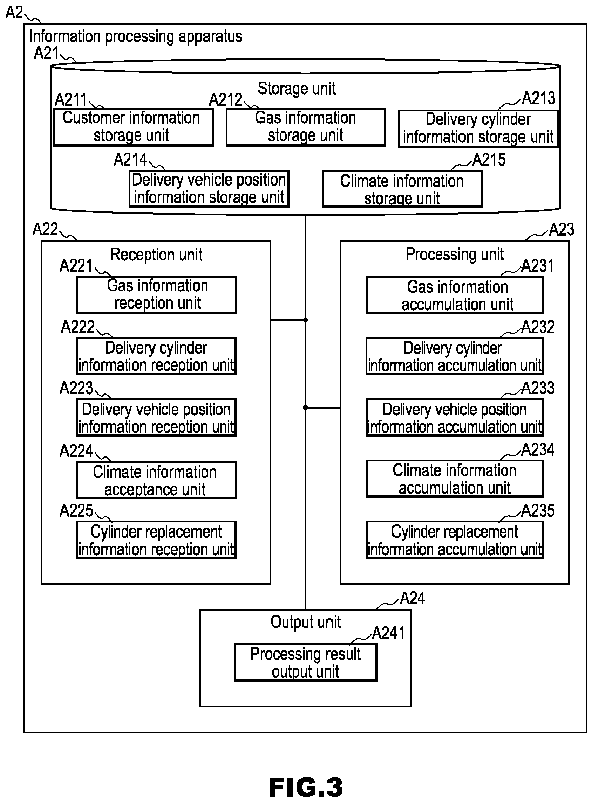

FIG. 2 is a block diagram for the information system A according to the present embodiment. FIG. 3 is a block diagram for the information processing apparatus A2 that is included in the information system A.

The gas information transmission apparatuses A1 includes a terminal storage unit A10, a terminal processing unit A11, and a terminal transmission unit A12. The terminal processing unit A11 includes a terminal acquisition unit A111 and a terminal accumulation unit A112.

The information processing apparatus A2 includes a storage unit A21, a reception unit A22, a processing unit A23, and an output unit A24. The storage unit A21 includes a customer information storage unit A211, a gas information storage unit A212, a delivery cylinder information storage unit A213, a delivery vehicle position information storage unit A214, and a climate information storage unit A215. The reception unit A22 includes a gas information reception unit A221, a delivery cylinder information reception unit A222, a delivery vehicle position information reception unit A223, a climate information acceptance unit A224, and a cylinder replacement information reception unit A225. The processing unit A23 includes a gas information accumulation unit A231, a delivery cylinder information accumulation unit A232, a delivery vehicle position information accumulation unit A233, a climate information accumulation unit A234, and a cylinder replacement information accumulation unit A235. The output unit A24 includes a processing result output unit A241.

Each deliverer terminal A3 includes a deliverer storage unit A31, a deliverer acceptance unit A32, a deliverer processing unit A33, a deliverer transmission unit A34, a deliverer reception unit A35, and a deliverer output unit A36.

Each facility terminal A4 includes a facility storage unit A41, a facility acceptance unit A42, a facility processing unit A43, a facility transmission unit A44, a facility reception unit A45, and a facility output unit A46.

The terminal storage unit A10 included in each gas information transmission apparatus A1 stores various kinds of information. Examples of the various kinds of information include gas information, a customer identifier that identifies a customer, a cylinder identifier that identifies a cylinder, and time information that specifies a time. Time information is, for example, date information that specifies a date, time point information that specifies a date and time, and time zone information that specifies a time zone. When time information is time point information, the time information may be regarded as including date information.

The terminal storage unit A10 stores pieces of gas information as of two or more points in time. Gas information is, for example, information associated with a cylinder identifier, a customer identifier that identifies a customer, and date information that indicates a date. Gas information is associated with time information, for example. Gas information contains, for example, gas use information. Gas use information is information regarding the gas used. Gas information contains, for example, one or more pieces of information of: unit time gas use information; and gas meter reading value information. Unit time gas use information is information that specifies the amount of gas used per unit time. Unit time gas use information is, for example, information that specifies the amount of gas used every one hour. Gas meter reading value information is, for example, information that specifies a gas meter reading value. Gas meter reading value information is, for example, information that specifies gas meter reading values acquired every one hour.

The gas information in the terminal storage unit A10 typically is information accumulated by the terminal accumulation unit A112.

The terminal processing unit A11 performs various kinds of processing. Examples of the various kinds of processing include processing that is performed by the terminal acquisition unit A111 and the terminal accumulation unit A112. Examples of the various kinds of processing include processing that is performed to delete gas information that has been transmitted, from the terminal storage unit A10.

The terminal acquisition unit A111 acquires gas information that is information that includes gas use information regarding the use of gas in an LPG cylinder and corresponds to a cylinder identifier that identifies an LPG cylinder. The terminal acquisition unit A111 acquires, for example, information from a gas meter. The terminal acquisition unit A111 acquires, for example, a meter reading value acquired from a gas meter, and calculates a gas use information that is the difference between the previous meter reading value and the current meter reading value and specifies the amount of gas used per unit time.

It is preferable that the terminal acquisition unit A111 acquires gas use information n times a day (n is 2 or more) every unit time. It is also preferable that the terminal acquisition unit A111 acquires gas use information every one hour.

It is preferable that the terminal acquisition unit A111 acquires time information from a clock (not shown) and associates the time information with the acquired gas use information. Note that the clock (not shown) may be present in the gas information transmission apparatuses A1 or may be a clock of an external apparatus such as an NTP server.

The terminal accumulation unit A112 accumulates the gas information acquired by the terminal acquisition unit A111, in the terminal storage unit A10. It is preferable that the terminal accumulation unit A112 accumulates the gas information acquired by the terminal acquisition unit A111, in the terminal storage unit A10 every unit time. Note that the unit time is, for example, on hour, thirty minutes, two hours, or the like. It is also preferable that the terminal accumulation unit A112 accumulates the gas information acquired by the terminal acquisition unit A111, in the terminal storage unit A10 in association with one or more pieces of information of: a customer identifier, a cylinder identifier, and time information.

The terminal transmission unit A12 transmits the gas information acquired by the terminal acquisition unit A111 to the information processing apparatus A2. The gas information acquired by the terminal acquisition unit A111 may be the gas information stored in the terminal storage unit A10.

The terminal transmission unit A12 transmits, for example, the gas information acquired by the terminal acquisition unit A111 to the information processing apparatus A2 in association with one or more identifiers. The one or more identifiers are, for example, one or more identifiers of: a cylinder identifier; and a cylinder identifier.

It is preferable that the terminal transmission unit A12 transmits gas information as of two or more time points stored in the terminal storage unit A10 to the information processing apparatus A2 when a predetermined condition is satisfied. The predetermined condition is, for example, that a predetermined time is reached, a predetermined number of pieces of gas information are stored in the terminal storage unit A10, or the like. In addition, transmitting gas information in association with a cylinder identifier or the like is, for example, transmitting gas information together with a cylinder identifier or the like, but there is no limitation on the method of associating pieces of information with each other. Note that the cylinder identifier is normally stored in the terminal storage unit A10. It is also preferable that, when the cylinder to be used is changed to another cylinder, the cylinder identifier of the other cylinder is automatically stored in the terminal storage unit A10.

Here, the transmission of gas information as of two or more time points may mean the transmission of two or more information sets that each consists of a piece of gas information and a piece of time information, or the transmission of two or more pieces of gas information arranged in chronological order.

In addition, the transmission of gas information for one day may mean the transmission of twenty-four information sets that each consists of gas information and time information, or the transmission of twenty-four pieces of gas information arranged in chronological.

Note that one piece of gas information is information that contains one piece of gas use information, but one piece of gas information may be information that contains a plurality of pieces of gas use information.

It is preferable that the terminal transmission unit A12 transmits two or more pieces of gas information in the terminal storage unit A10 to the information processing apparatus A2 less than n times a day.

It is preferable that the terminal transmission unit A12 transmits gas information to the information processing apparatus A2 once a day. Note that there is no limitation on the time at which the terminal transmission unit A12 transmits gas information.

The terminal transmission unit A12 may transmit gas information at different time points depending on a condition. That is, for example, the terminal transmission unit A12 may normally transmit a plurality of pieces of gas information to the information processing apparatus A2 at a low frequency (a first frequency), and when a predetermined condition is satisfied, the terminal transmission unit A12 may transmit gas information to the information processing apparatus A2 at a higher frequency (a second frequency) than the frequency in the normal case. The predetermined condition here is, for example, that the terminal processing unit A11 determines that the amount of gas that has been used is large enough to satisfy the predetermined condition (for example, an amount of gas no less than or greater than a threshold value has been used). Alternatively, the predetermined condition is, for example, that the terminal processing unit A11 determines that a small amount of gas has been used for a period that is long enough to satisfy the predetermined condition (for example, an amount of gas no greater than or less than a threshold value has been used for a period no less than a first threshold value).

It is also preferable that, after the terminal transmission unit A12 has transmitted gas information to the information processing apparatus A2, the terminal processing unit A11 deletes the transmitted gas information from the terminal storage unit A10.

The storage unit A21 included in the information processing apparatus A2 stores various kinds of information. Examples of the various kinds of information include customer information described later, gas information, delivery cylinder information described later, delivery vehicle position information described later, and climate information described later.

The customer information storage unit A211 stores one or more pieces of customer information each in association with a customer identifier. Customer information is information regarding a customer. Customer information contains, for example, a name, customer position information, and contact information. Customer position information is information that specifies the position of a customer. Customer position information is, for example, (latitude,longitude), address, or the like. Contact information is information that specifies a point of contact, and is, for example, an e-mail address or a telephone number. date information contains, for example, date information that specifies the date on which the gas cylinder was replaced. The customer information contains, for example, cylinder type information, cylinder number information, and gas remaining amount information. Cylinder type information is information that specifies the type of the cylinder used by the customer. The cylinder number information is information that specifies the number of cylinders installed in the customer's home. Gas remaining amount information is information that specifies the amount of gas remaining in the customer's gas cylinders. Customer information contains, for example, one or more medium identifiers that identify the medium used by the customer (for example, "LPG" and "electricity"), one or more appliance identifiers of energy appliances owned by the customer (for example, "gas appliance A", "electric appliance B", and "appliance C"), and one or more company identifiers that identify the energy companies with which the customer has a contract (for example, "company A"). Customer information may contain, for example, LPG cylinder information that contains cylinder capacity information regarding the capacity of the LPG cylinder used by the customer. Note that LPG cylinder information may be cylinder type information.

The gas information storage unit A212 stores one or more pieces of gas information. The gas information storage unit A212 normally stores two or more pieces of gas information associated with customer identifiers. It is preferable that the pieces of gas information are associated with one or more pieces of information of: time information that specifies a time; and a cylinder identifier. In addition, here, the association with time information and cylinder identifier may be realized by storing gas information so that time information and a cylinder identifier can be known.

The delivery cylinder information storage unit A213 stores one or more pieces of delivery cylinder information. Delivery cylinder information is information regarding a cylinder that is to be delivered. Delivery cylinder information contains, for example, cylinder type information and cylinder state information. Delivery cylinder information typically is information from which the number of cylinders can be known. That is to say, delivery cylinder information may contain number information that specifies the number of cylinders, or the number of pieces of delivery cylinder information that have been received may indicate the number of cylinders. Cylinder type information is information that specifies the type of the cylinder, and indicates, for example, 20 Kg, 30 Kg, or 50 Kg. Cylinder state information is information that indicates whether or not the cylinder is full. Delivery cylinder information corresponds to, for example, one or more pieces of information of: a cylinder identifier; a delivery vehicle identifier; a deliverer identifier; and time information that specifies entry/exit date and time. Note that the entry/exit date and time is an entry date and time or an exit date and time to/from a factory where the cylinder is to be filled with gas, or entry date and time or an exit date and time to/from a depot station where cylinders are stored. Alternatively, time point information may be information that only specifies a date.

The delivery vehicle position information storage unit A214 stores one or more pieces of delivery vehicle position information. Delivery vehicle position information is information that specifies the position of a delivery vehicle. Delivery vehicle position information is, for example, (latitude,longitude), but may be, for example, a facility identifier that identifies the nearest facility. The facility is, for example, a factory or a depot station. Delivery vehicle position information is associated with, for example, a delivery vehicle identifier that identifies the delivery vehicle for the cylinder, or a deliverer identifier.

The climate information storage unit A215 stores one or more pieces of climate information. Climate information is information regarding weather. Climate information is, for example, one or more pieces of information of: weather; temperature; humidity; and so on. It is preferable that climate information is associated with time information. Time information is, for example, date information and time point information.

The reception unit A22 receives various kinds of information. Examples of the various kinds of information include gas information, delivery cylinder information, delivery vehicle position information, climate information, and cylinder replacement information.

The gas information reception unit A221 receives one or more pieces of gas information from the gas information transmission apparatuses A1. The gas information reception unit A221 receives, for example, gas information associated with one or more identifiers of: a customer identifier; and a cylinder identifier, from the gas information transmission apparatuses A1.

The delivery cylinder information reception unit A222 receives one or more pieces of delivery cylinder information. The delivery cylinder information reception unit A222 receives delivery cylinder information in association with one or more pieces of information of: a cylinder identifier; a delivery vehicle identifier; and a deliverer identifier, for example. The delivery cylinder information reception unit A222 receives delivery cylinder information in association with a loading platform identifier, for example. The loading platform identifier is information that specifies a loading platform loading platform on which the cylinder is placed. The delivery cylinder information reception unit A222 receives delivery cylinder information in association with time point information that identifies entry/exit date and time, for example. The entry/exit date and time is the date and time of entry/exit to/from a facility. The delivery cylinder information reception unit A222 receive delivery cylinder information from the facility terminals A4, for example. The delivery cylinder information reception unit A222 receive delivery cylinder information from the deliverer terminals A3, for example. Note that there is no limitation on the source of delivery cylinder information. The cylinder identifier is, for example, information stored in a communication means (for example, an RFID tag) installed in a cylinder that is to be delivered, and indirectly or directly received from such a communication means. The cylinder identifier may be, for example, information input to a facility terminal A4 by a user and transmitted from the facility terminal A4. The delivery vehicle identifier is, for example, information stored in a communication means (for example, an RFID tag) installed in a delivery vehicle itself (for example, a trailer head), and indirectly or directly received from such a communication means. Note that, in such a case, the delivery vehicle identifier may be referred to as a trailer head identifier. In addition, the delivery vehicle identifier and the trailer head identifier may be different pieces of information, and in such a case, the delivery cylinder information reception unit A222 may receive delivery cylinder information in association with the trailer head identifier. In addition, the deliverer identifier is, for example, information indirectly or directly received from a deliverer terminal A3 held by a deliverer. The deliverer identifier may be, for example, information stored in a communication means installed in a delivery vehicle itself (for example, a trailer head), and indirectly or directly received from such a communication means. Furthermore, the loading platform identifier is, for example, information stored in a communication means (for example, an RFID tag) installed in a loading platform of a delivery vehicle, and indirectly or directly received from such a communication means.

The delivery vehicle position information reception unit A223 receives one or more pieces of delivery vehicle position information. The delivery vehicle position information reception unit A223 normally receives delivery vehicle position information from the deliverer terminals A3 that are terminals on delivery vehicles, but there is no limitation on the source of delivery vehicle position information. Note that the deliverer terminals A3 may be terminals that are different from the terminals held by deliverers, and may be terminals mounted on delivery vehicles.

The delivery vehicle position information reception unit A223 normally receives delivery vehicle position information in association with a delivery vehicle identifier that identifies a delivery vehicle. However, the delivery vehicle position information reception unit A223 may receive delivery vehicle position information in association with a deliverer identifier. Also, delivery vehicle identifier and deliverer identifier may be the same information.

The climate information acceptance unit A224 receives one or more pieces of climate information. Here, "acceptance" means, for example, reception from a server apparatus (not shown), but may be regarded as a concept that includes acceptance of information input from an input device such as a keyboard, a mouse, or a touch panel, or acceptance of information read from a recording medium such as an optical disk, a magnetic disk, or a semiconductor memory. Note that the server apparatus (not shown) is an apparatus that stores climate information.

The cylinder replacement information reception unit A225 receives one or more pieces of cylinder replacement information. Cylinder replacement information is information that indicates that a cylinder has been replaced. The cylinder replacement information reception unit A225 receives cylinder replacement information that is paired with one or more pieces of information of: a customer identifier; and a cylinder identifier, for example. The cylinder replacement information reception unit A225 receives, for example, cylinder replacement information from a deliverer terminal A. Note that there is no limitation on the transmission source of cylinder replacement information.

The processing unit A23 performs predetermined processing, using two or more pieces of gas information stored in the gas information storage unit A212. Examples of the predetermined processing include delivery date prediction processing described later, delivery control processing described later, futures trading processing described later, residence stay processing described later, energy optimum plan presentation processing described later, household credit rating acquisition processing described later, statistical processing, and so on. statistical processing is statistical processing to be performed on a plurality of pieces of gas information. Examples of statistical processing includes processing that is performed to calculate the average amount of gas used by a household for a certain period from a plurality of pieces of gas information, processing that is performed to calculate the cumulative value of the amount of gas used for a certain period, and processing that is performed to acquire a graph showing changes in the amount of gas used. Note that delivery date prediction processing, delivery control processing, futures trading processing, residence stay processing, energy optimum plan presentation processing, and household credit rating acquisition processing will be described in Embodiment 2 and the subsequent embodiments. Note that delivery date prediction processing is processing that is performed to predict the delivery date on which a gas cylinder is to be delivered to household. Delivery control processing is processing that is performed to deliver a gas cylinder to a household that has run out of gas, for example. Futures trading processing is processing that is performed to determine the price of gas and supporting futures trading. Residence stay processing is processing that is performed to output information regarding whether or not an inhabitant is present in a residence. Energy optimum plan presentation processing is processing that is performed to present an appropriate energy plan. Household credit rating acquisition processing is processing that is performed to acquire and output a credit rating of a household.

The processing unit A23 performs predetermined processing, also using one or more pieces of delivery cylinder information stored in the delivery cylinder information storage unit A213, for example. The predetermined processing is, for example, delivery control processing.

The processing unit A23 performs the predetermined processing, using one or more pieces of delivery vehicle position information stored in the delivery vehicle position information storage unit A214, for example. The predetermined processing is, for example, delivery control processing.

The processing unit A23 performs the predetermined processing, using one or more pieces of climate information stored in the climate information storage unit A215. Examples of the predetermined processing include delivery date prediction processing, futures trading processing, and energy optimum plan presentation processing.

The gas information accumulation unit A231 accumulates the one or more pieces of gas information received by the gas information reception unit A221, in the gas information storage unit A212. The gas information accumulation unit A231 accumulates each piece of gas information received by the gas information reception unit A221, in the gas information storage unit A212, in association with one or more pieces of information of: time information; a customer identifier; and a cylinder identifier. Note that such time information may be information received from the gas information transmission apparatuses A1, or information acquired from a clock (not shown).

The delivery cylinder information accumulation unit A232 accumulates the one or more pieces of delivery cylinder information received by the delivery cylinder information reception unit A222, in the delivery cylinder information storage unit A213. The delivery cylinder information accumulation unit A232 accumulates each piece of delivery cylinder information in the delivery cylinder information storage unit A213 in association with one or more pieces of information of: a cylinder identifier; a delivery vehicle identifier; and a deliverer identifier, for example.

The delivery vehicle position information accumulation unit A233 accumulates the one or more pieces of delivery vehicle position information received by the delivery vehicle position information reception unit A223, in the delivery vehicle position information storage unit A214. The delivery vehicle position information accumulation unit A233 accumulates each piece of delivery vehicle position information in the delivery vehicle position information storage unit A214 in association with a delivery vehicle identifier or a deliverer identifier.

The climate information accumulation unit A234 accumulates one or more pieces of climate information, in the climate information storage unit A215. The climate information accumulation unit A234 normally each piece of climate information in the climate information storage unit A215 in association with time information. Note that time information may be information received by the reception unit A22 or may be acquired from a clock (not shown). In addition, time information may be date information or time point information.

When the cylinder replacement information reception unit A225 receives cylinder replacement information, the cylinder replacement information accumulation unit A235 updates the gas remaining amount information contained in the gas information paired with one or more pieces of information of: a customer identifier; and a cylinder identifier, to information that specifies that the amount of gas remaining is full.

The deliverer storage unit A31 included in each deliverer terminal A3 stores various kinds of information. Examples of the various kinds of information include a deliverer identifier that identifies a deliverer. Examples of the various kinds of information include a delivery vehicle identifier that identifies a delivery vehicle. The deliverer identifier and the delivery vehicle identifier may be the same information. Examples of the various kinds of information include cylinder replacement information. Cylinder replacement information is information that indicates that a cylinder has been replaced. Cylinder replacement information is associated with one or more identifiers of: a customer identifier; and a cylinder identifier.

The deliverer acceptance unit A32 accepts various instructions and various kinds of information. Examples of the various instructions and various kinds of information include cylinder replacement information. Examples of the various instructions and various kinds of information include cylinder replacement information and one or more identifiers of: a customer identifier; and a cylinder identifier. When a cylinder of a certain household is to be replaced or has been replaced, the deliverer inputs cylinder exchange information to the deliverer terminal A3. In addition, cylinder replacement information may be input by pressing a button, or may be input by inputting information in a field, for example.

It is preferable that the deliverer inputs one or more identifiers of: a customer identifier; and a cylinder identifier together with cylinder replacement information. In such a case, the deliverer acceptance unit A32 accepts cylinder replacement information, and one or more identifiers of: a customer identifier; and a cylinder identifier.

Any input means may be employed to input cylinder replacement information, such as a touch panel, a keyboard, a mouse, a menu screen, or the like. The deliverer acceptance unit A32 can be realized using a device driver for the input means such as a touch panel or a keyboard, or control software or the like for controlling the menu screen.

The deliverer processing unit A33 performs various kinds of processing. Examples of the various kinds of information include processing that is performed to convert the information accepted by the deliverer acceptance unit A32 so as to have a data structure of information to be transmitted. Examples of the various kinds of processing include processing that is performed when the deliverer acceptance unit A32 accepts cylinder replacement information, to form information in which the cylinder replacement information, the deliverer identifier in the deliverer storage unit A31, and one or more identifiers of: the customer identifier; and the cylinder identifier, which have been input, are associated with each other. Examples of the various kinds of information include processing that is performed to convert the information received by the deliverer reception unit A35 so as to have a data structure of information that is to be output.

The deliverer transmission unit A34 transmits cylinder replacement information to the information processing apparatus A2. The deliverer transmission unit A34 normally transmits cylinder replacement information that is associated with one or more identifiers of: a customer identifier; and a cylinder identifier, to the information processing apparatus A2. It is preferable that the deliverer transmission unit A34 transmits a deliverer identifier as well as cylinder replacement information.

The deliverer reception unit A35 receives various kinds of information. The deliverer reception unit A35 receives various kinds of information from the information processing apparatus A2, for example. The deliverer reception unit A35 receives customer information described later, from the information processing apparatus A2, for example. Note that customer information is information regarding a customer, and is information paired with a customer identifier. The customer information received by the deliverer reception unit A35 is information regarding the customer to which a gas cylinder is to be delivered, for example. Note that the customer identifier may be contained in customer information.

The deliverer output unit A36 outputs various kinds of information. Examples of the various kinds of information include information formed by the deliverer processing unit A33. Examples of the various kinds of information include customer information. Customer information is information regarding the customer to which a gas cylinder is to be delivered. It is preferable that customer information contains one or more pieces of information of: a customer identifier; customer position information; and information regarding the gas cylinder to be delivered. Customer position information is information that specifies the position of a customer. Customer position information is, for example, (latitude,longitude), address, or the like. Information regarding the gas cylinder to be delivered is, for example, cylinder type information that specifies the type of a gas cylinder, the number of gas cylinders, and so on.

Here, "output" typically means displaying on a display device, but may be regarded as a concept that includes projection with a projector, printing with a printer, sound output, transmission to an external apparatus, accumulation on a recording medium, delivery of processing results to another processing apparatus or another program, and so on.

The facility storage unit A41 included in each facility terminal A4 stores various kinds of information. Examples of the various kinds of information include a facility identifier that identifies a facility. It is preferable that the facility storage unit A41 stores delivery cylinder information that is information received by a terminal in a delivery vehicle, (for example, an RFID) and is information regarding a cylinder mounted on the delivery vehicle. Delivery cylinder information is associated with a cylinder identifier. It is preferable that delivery cylinder information is associated with a loading platform identifier and entry/exit date and time, for example. Delivery cylinder information contains, for example, cylinder type information and cylinder state information. It is preferable that delivery cylinder information contains information that specifies the number of cylinders to be delivered.

The facility acceptance unit A42 accepts various instructions and various kinds of information.

The facility processing unit A43 performs various kinds of processing. Examples of the various kinds of processing include processing that is performed to accumulate information received by the facility reception unit A45. The facility processing unit A43 at least temporarily accumulates the delivery cylinder information and identifiers received by the facility reception unit A45, in the facility storage unit A41. Note that examples of the identifiers include one or more identifiers of: a cylinder identifier; a loading platform identifier; a delivery vehicle identifier; and a deliverer identifier.

The facility transmission unit A44 transmits various kinds of information. The facility transmission unit A44 transmits, for example, various kinds of information to the information processing apparatus A2. The facility transmission unit A44 transmits delivery cylinder information in association with identifiers, for example. Examples of the identifiers include one or more identifiers of: a cylinder identifier; a loading platform identifier; a delivery vehicle identifier; and a deliverer identifier.

The facility reception unit A45 receives various kinds of information. The facility reception unit A45 receives, for example, various kinds of information from a terminal of a delivery vehicle (for example, an RFID). The facility reception unit A45 receives delivery cylinder information in association with identifiers, for example. Examples of the identifiers include one or more identifiers of: a cylinder identifier; a loading platform identifier; a delivery vehicle identifier; and a deliverer identifier.

The facility output unit A46 outputs various kinds of information.

It is preferable that the terminal storage unit A10, the storage unit A21, the customer information storage unit A211, the gas information storage unit A212, the delivery cylinder information storage unit A213, the delivery vehicle position information storage unit A214, the climate information storage unit A215, the deliverer storage unit A31, and the facility storage unit A41 are realized using a non-volatile recording medium, but they can be realized using a volatile recording medium.

There is no limitation on the process in which information is stored in the terminal storage unit A10 and so on. For example, information may be stored in the terminal storage unit A10 or the like via a recording medium, or information transmitted via a communication line or the like may be stored in the terminal storage unit A10 or the like, or information input via an input device may be stored in the terminal storage unit A10 or the like.

The terminal processing unit A11, the terminal acquisition unit A111, the terminal accumulation unit A112, the processing unit A23, the gas information accumulation unit A231, the delivery cylinder information accumulation unit A232, the delivery vehicle position information accumulation unit A233, the climate information accumulation unit A234, the cylinder replacement information accumulation unit A235, the deliverer processing unit A33, and the facility processing unit A43 can typically be realized using an MPU, a memory, or the like. The processing procedures performed by the terminal processing unit A11 and so on typically are realized using software, and the software is recorded on a recording medium such as a ROM. However, such processing procedures may be realized using hardware (a dedicated circuit). Needless to say, a CPU or a GPU may be used instead of the MPU.

The terminal transmission unit A12, the output unit A24, processing result output unit A241, the deliverer transmission unit A34, and the facility transmission unit A44 typically are realized using a wireless or wired communication means, but may be realized using a broadcast means.

The reception unit A22, the gas information reception unit A221, the delivery cylinder information reception unit A222, the delivery vehicle position information reception unit A223, the climate information acceptance unit A224, the cylinder replacement information reception unit A225, the deliverer reception unit A35, and the facility reception unit A45 typically are realized using a wireless or wired communication means, but may be realized using a means for receiving broadcast.

The deliverer acceptance unit A32 and the facility acceptance unit A42 can be realized using a touch panel, a keyboard, a mouse, a menu screen, or the like.

The deliverer output unit A36 and the facility output unit A46 may be regarded as including or not including an output device such as a display or a speaker. The deliverer output unit A36 and so on can be realized using the driver software of the output device, the driver software of the output device and the output device, or the like.

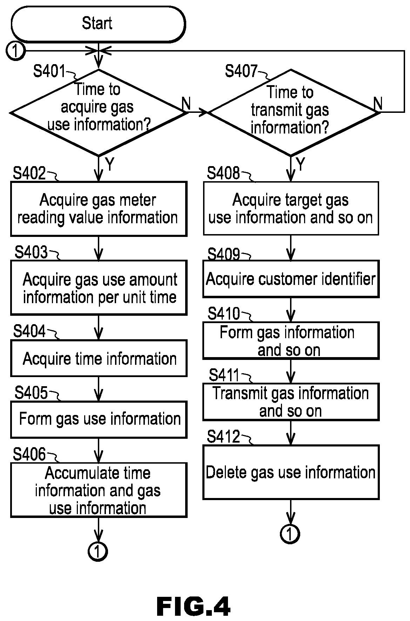

Next, operations that are performed by the information system A will be described. First, examples of operations that are performed by the gas information transmission apparatus A1 will be described with reference to the flowchart shown in FIG. 4.

(Step S401) The terminal processing unit A11 determines whether or not it is the time to acquire gas use information. If it is the time to acquire gas use information, processing proceeds to step S402, and if it is not the time to acquire gas use information, processing proceeds to step S407. For example, when acquiring gas use information every one hour, the terminal processing unit A11 acquires time information from a clock (not shown), and if the time indicated by the time information matches "X hour 00 minutes" (X is a natural number in the range of 1 to 24), the terminal processing unit A11 determines that it is the time to acquire gas use information.

(Step S402) The terminal acquisition unit A111 acquires gas meter reading value information from a gas meter (not shown). Noted that such a technique is a well-known technique. Note that the gas meter typically is an LP gas meter, and is a device that holds the gas meter reading value that indicates the flow rate integration measured from the installation of the device.

(Step S403) The terminal acquisition unit A111 calculates information indicating gas use amount per unit time, which is the difference between the previously acquired gas meter reading value information and the gas meter reading value information currently acquired in step S402. Note that the terminal acquisition unit A111 acquires the information indicating the gas use amount per unit time by calculating, for example, "information indicating the gas use amount per unit time = the previously acquired gas meter reading value information - the gas meter reading value information acquired in step S402".

(Step S404) The terminal acquisition unit A111 acquires time information that indicates the current time from a clock (not shown).

(Step S405) The terminal acquisition unit A111 forms gas use information to be accumulated, using the information indicating the gas use amount per unit time, acquired in step S403.

(Step S406) The terminal accumulation unit A112 accumulates the time information acquired in step S404 and the gas use information formed in step S405 in association with each other. Processing returns to step S401. Note that the location where the gas use information or the like is to be accumulated typically is the terminal storage unit A10. Note that the terminal accumulation unit A112 may accumulate gas use information in association with a cylinder identifier. In such a case, the terminal acquisition unit A111 acquires the cylinder identifier as well.

(Step S407) The terminal processing unit A11 determines whether or not it is the time to transmit gas information. If it is the time to transmit gas information, processing proceeds to step S408, and if it is not the time to transmit gas information, processing returns to step S401. For example, when transmitting gas information once a day, the terminal processing unit A11 acquires time information from a clock (not shown), and upon determining that the time indicated by the time information has passed a predetermined time (for example, "24:01"), the terminal processing unit A11 determines that it is the time to transmit gas information. Note that even if it is determined that the predetermined time has passed, the gas information that has already been transmitted is usually not transmitted again. Also, even if the terminal processing unit A11 determines that the predetermined time has passed, the terminal processing unit A11 usually does not determine that it is the time to transmit gas information until a predetermined period (for example, one day) elapses.

(Step S408) The terminal processing unit A11 acquires gas use information and so on to be transmitted, from the terminal storage unit A10. The gas use information and so on are, for example, a set of pieces of information composed of gas use information and time information, gas use information alone, gas use information and a cylinder identifier, or a set of pieces of information composed of gas use information, a cylinder identifier, and time information.

(Step S409) The terminal processing unit A11 acquires a customer identifier from the terminal storage unit A10.

(Step S410) The terminal processing unit A11 forms gas information and so on to be transmitted. Gas information contains, for example, a plurality of pieces of gas use information and so on and one or more identifiers. The one or more identifiers are, for example, one or more pieces of information of: a customer identifier; and a cylinder identifier.

(Step S411) The terminal transmission unit A12 transmits the gas information and so on formed in step S410 to the information processing apparatus A2.

(Step S412) The terminal processing unit A11 deletes the transmitted gas use information and so on. Here, a flag indicating that the information has been transmitted may be accumulated in association with the transmitted gas use information and so on. Such addition of a flag may be regarded as the same as the deletion. Processing returns to step S401.

In the flowchart shown in FIG. 4, the number of times gas use information is accumulated is larger than the number of times gas information is transmitted. That is to say, in the flowchart shown in FIG. 4, a plurality of pieces of gas use information are transmitted to the information processing apparatus A2 all at once. As a result, the power consumption of the gas information transmission apparatus A1 can be reduced, and the frequency of battery replacement of the gas information transmission apparatus A1 can be reduced. However, in the flowchart shown in FIG. 4, gas information may be transmitted each time gas use information is acquired.

Also, in the flowchart shown in FIG. 4, the terminal transmission unit A12 may transmit gas information to the information processing apparatus A2 at different frequencies in a case where a predetermined condition is satisfied and in a case where the predetermined condition is not satisfied. Here, the predetermined condition is, for example, that the terminal processing unit A11 determines that the amount of gas that has been used is large enough to satisfy the predetermined condition.

In the flowchart shown in FIG. 4, processing is terminated when power is turned off or an interruption is made to terminate the processing.

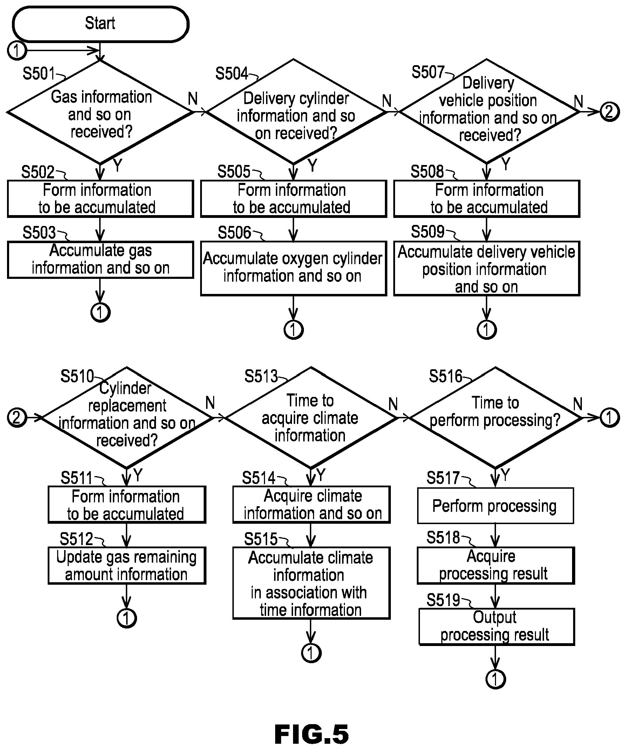

Next, examples of operations that are performed by the information processing apparatus A2 will be described with reference to the flowchart shown in FIG. 5.

(Step S501) The gas information reception unit A221 determines whether or not gas information and so on transmitted from the gas information transmission apparatuses A1 have been received. If gas information and so on have been received, processing proceeds to step S502, and if gas information and so on have not been received, processing proceeds to step S504. Gas information and so on are, for example, gas information and one or more identifiers. The one or more identifiers are, for example, one or more pieces of information of: a customer identifier; and a cylinder identifier.

(Step S502) The gas information accumulation unit A231 forms gas information and so on to be accumulated, using the gas information and so on received in step S501.

(Step S503) The gas information accumulation unit A231 accumulates the gas information and so on formed in step S502 in the gas information storage unit A212. Processing returns to step S501.

(Step S504) The delivery cylinder information reception unit A222 determines whether or not delivery cylinder information and so on have been received. If delivery cylinder information and so on have been received, processing proceeds to step S505, and if delivery cylinder information and so on have not been received, processing proceeds to step S507. Delivery cylinder information and so on are, for example, delivery cylinder information and one or more identifiers. The one or more identifiers are, for example, one or more pieces of information of: a cylinder identifier; a deliverer identifier; and a delivery vehicle identifier.

(Step S505) The delivery cylinder information accumulation unit A232 forms delivery cylinder information and so on to be accumulated, using the delivery cylinder information and so on received in step S504.

(Step S506) The delivery cylinder information accumulation unit A232 accumulates the delivery cylinder information and so on formed in step S505, in the delivery cylinder information storage unit A213. Processing returns to step S501.

(Step S507) The delivery vehicle position information reception unit A223 determines whether or not delivery vehicle position information and so on have been received. If delivery vehicle position information and so on have been received, processing proceeds to step S508, and if delivery vehicle position information and so on have not been received, processing proceeds to step S510. Delivery vehicle position information and so on are, for example, delivery vehicle position information and one or more identifiers. The one or more identifiers are, for example, one or more pieces of information of: a deliverer identifier; and a delivery vehicle identifier.

(Step S508) The delivery vehicle position information accumulation unit A233 forms delivery vehicle position information and so on to be accumulated, using the delivery vehicle position information and so on received in step S507.

(Step S509) The delivery vehicle position information accumulation unit A233 accumulates the delivery vehicle position information and so on formed in step S508, in the delivery vehicle position information storage unit A214. Processing returns to step S501.

(Step S510) Cylinder replacement information reception unit A225 determines whether or not cylinder replacement information and so on have been received. If cylinder replacement information and so on have been received, processing proceeds to step S511, and if cylinder replacement information and so on have not been received, processing proceeds to step S513. Cylinder replacement information and so on are, for example, cylinder replacement information and one or more identifiers. The one or more identifiers are, for example, one or more pieces of information of: a customer identifier; and a cylinder identifier.

(Step S511) The cylinder replacement information accumulation unit A235 forms cylinder replacement information and so on to be accumulated, using the cylinder replacement information and so on received in step S510.

(Step S512) The cylinder replacement information accumulation unit A235 updates the gas remaining amount information regarding the customer information storage unit A211, using the cylinder replacement information and so on formed in step S511. Processing returns to step S501.

(Step S513) The processing unit A23 determines whether or not it is the time to acquire climate information. If it is the time to acquire climate information, processing proceeds to step S514, and if it is not the time to acquire climate information, processing proceeds to step S516. Note that the time to acquire climate information is, for example, every one hour, every one day, or the like.

(Step S514) The climate information acceptance unit A224 acquires climate information and so on from a server (not shown). Here, the climate information acceptance unit A224 may acquire climate information and so on regarding two or more regions, for example.

(Step S515) The climate information accumulation unit A234 accumulates the climate information and so on acquired in step S514 in association with time information, in the climate information storage unit A215. Processing returns to step S501. Climate information and so on are, for example, climate information and time information. The climate information accumulation unit A234 may accumulate climate information and so on in association with time information and a region identifier that identifies a region, in the climate information storage unit A215.

(Step S516) The processing unit A23 determines whether or not it is the time to perform processing, using gas information. If it is the time to perform processing, processing proceeds to step S517, and if it is not the time to perform processing, processing returns to step S501.

(Step S517) The processing unit A23 preforms predetermined processing. Examples of predetermined processing include delivery date prediction processing, delivery control processing, futures trading processing, residence stay processing, energy optimum plan presentation processing, household credit rating acquisition processing, and statistical processing.

(Step S518) The processing unit A23 acquires a processing result that is information that specifies the result of processing performed in step S517.

(Step S519) The processing result output unit A241 outputs the processing result acquired in step S518. Processing returns to step S501.

In the flowchart shown in FIG. 5, processing is terminated when power is turned off or an interruption is made to terminate the processing.

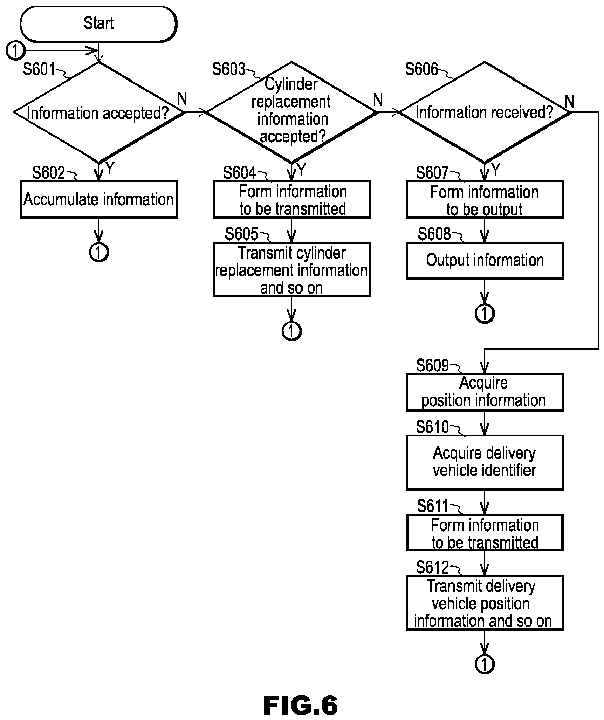

Next, examples of operations that are performed by each deliverer terminal A3 will be described with reference to the flowchart shown in FIG. 6.

(Step S601) The deliverer acceptance unit A32 determines whether or not information has been accepted. If information has been accepted, processing proceeds to step S602, and if information has not been accepted, processing proceeds to step S603. Examples of information include a customer identifier and a cylinder identifier.

(Step S602) The deliverer processing unit A33 at least temporarily accumulate the information accepted in step S601, in the deliverer storage unit A31. Processing returns to step S601.

(Step S603) The deliverer acceptance unit A32 determines whether or not cylinder replacement information has been accepted. If cylinder replacement information has been accepted, processing proceeds to step S604, and if cylinder replacement information has not been accepted, processing proceeds to step S606.

(Step S604) The deliverer processing unit A33 forms cylinder replacement information and so on to be transmitted. Cylinder replacement information and so on contain, for example, a customer identifier and a cylinder identifier.

(Step S605) The deliverer transmission unit A34 transmits the cylinder replacement information and so on formed in step S604 to the information processing apparatus A2. Processing returns to step S601.

(Step S606) The deliverer reception unit A35 determines whether or not information has been received. If information has been received, processing proceeds to step S607, and if information has not been received, processing proceeds to step S609. Note that examples of information include customer information and a delivery list. The delivery list is information regarding a list of customers to which the deliverer delivers gas cylinders.

(Step S607) The deliverer processing unit A33 forms information that is to be output, using the information received in step S606. Examples of information that is to be output include customer information, a delivery list, a map that explicitly shows the position specified by the customer position information contained in the customer information, and route information that is the result of a search for a route from the position specified by delivery vehicle position information to the position specified by the customer position information. Note that the deliverer processing unit A33 may have the function of acquiring delivery vehicle position information (for example, the function of a GPS receiver) and a route search function.

(Step S608) The deliverer output unit A36 outputs the information formed in step S607. Processing returns to step S601.

(Step S609) The deliverer processing unit A33 acquires position information regarding the delivery vehicle. Note that when the deliverer processing unit A33 acquires position information, the deliverer processing unit A33 typically has a GPS receiver, but may use another means to acquire position information. The other means uses, for example, the strength of radio waves transmitted from three or more radio base stations, to perform processing, for example.

(Step S610) The deliverer processing unit A33 acquires a delivery vehicle identifier from the deliverer storage unit A31.

(Step S611) The deliverer processing unit A33 forms delivery vehicle position information and so on to be transmitted, using the delivery vehicle position information acquired in step S609 and the delivery vehicle identifier acquired in step S610.

(Step S612) The deliverer transmission unit A34 transmits the delivery vehicle position information and so on formed in step S611 to the information processing apparatus A2. Processing returns to step S601.

Note that there is no limitation on the time at which the delivery vehicle position information is transmitted in the flowchart shown in FIG. 6.

In the flowchart shown in FIG. 6, processing is terminated when power is turned off or an interruption is made to terminate the processing.

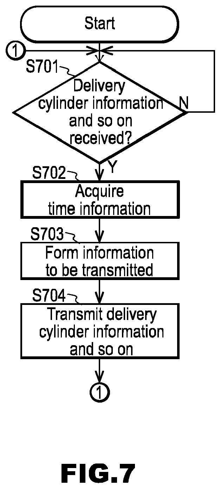

Next, examples of operations that are performed by each facility terminal A4 will be described with reference to the flowchart shown in FIG. 7.

(Step S701) The facility reception unit A45 determines whether or not delivery cylinder information and so on have been received. If delivery cylinder information and so on have been received, processing proceeds to step S702, and if delivery cylinder information and so on have not been received, processing returns to step S701.

(Step S702) The facility processing unit A43 acquires time information from a clock (not shown).

(Step S703) The facility processing unit A43 forms delivery cylinder information and so on to be transmitted, using the delivery cylinder information and so on received in step S701 and the time information acquired in step S702.

(Step S704) The facility transmission unit A44 transmits the delivery cylinder information and so on formed in step S703 to the information processing apparatus A2. Processing returns to step S701.

In the flowchart shown in FIG. 7, processing is terminated when power is turned off or an interruption is made to terminate the processing.

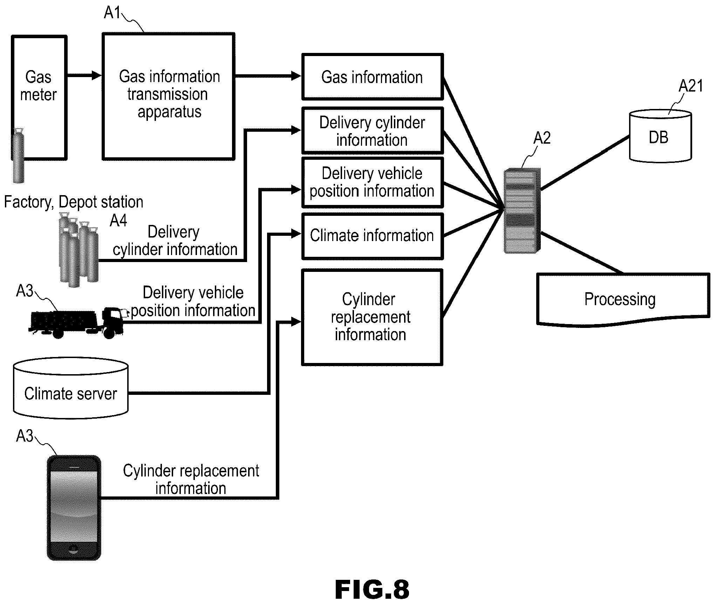

The following describes specific examples of operations that are performed by the information system A according to the present embodiment with reference to a conceptual diagram (FIG. 8) for processing that is performed by the information system A. Note that the conceptual diagram for the system structure of the information system A is FIG. 1.

In the information system A, as described above, pieces of gas information are transmitted from the gas information transmission apparatuses A1 to the information processing apparatus A2 at appropriate points in time, and are accumulated in the information processing apparatus A2. Also, pieces of delivery vehicle position information are transmitted from the deliverer terminals A3 to the information processing apparatus A2, and are accumulated in the information processing apparatus A2. Also, pieces of delivery cylinder information are transmitted from the facility terminals A4 to the information processing apparatus A2, and are accumulated in the information processing apparatus A2. Also, pieces of cylinder replacement information are transmitted from the deliverer terminals A3 to the information processing apparatus A2, and are accumulated in the information processing apparatus A2. Also, the information processing apparatus A2 receives and accumulates climate information from a climate server (not shown). Note that the climate server is a server that stores climate information.

The deliverer terminals A3 that transmit delivery vehicle position information and the deliverer terminals A3 that transmit the deliverer terminals A3 are terminals used by deliverers, and, needless to say, they may be different terminals.

In the information processing apparatus A2, the processing unit A23 performs various kinds of processing, using various kinds of information accumulated in the DB (A21). Examples of the various kinds of processing include delivery date prediction processing, delivery control processing, futures trading processing, residence stay processing, energy optimum plan presentation processing, and household credit rating acquisition processing. Examples of the various kinds of processing may also include processing performed to simply output the results of the above-described statistical processing and various kinds of accumulated information.

As described above, according to the present embodiment, the gas information and so on that contain gas use information regarding the use of LPG cylinders can be collected and used.

In addition, according to the present embodiment, the power consumption of the power source of the gas information transmission apparatuses A1 can be reduced by efficiently transmitting gas information.

In addition, according to the present embodiment, delivery cylinder information that is information regarding the cylinders to be delivered can also be collected and used.

In addition, according to the present embodiment, delivery cylinder information that is information that contains cylinder type information can also be collected and used.

In addition, according to the present embodiment, climate information can also be acquired and used.

Furthermore, according to the present embodiment, cylinder replacement information can be received and used when a cylinder is replaced.

Note that the processing in the present embodiment may be realized using software. This software may be distributed through software downloading or the like. Also, this software may be recorded on a recording medium such as a CD-ROM and distributed. Note that the same applies to the other embodiments in the present description. The software that realizes the gas information transmission apparatuses A1 in the present embodiment is the program described below. That is to say, this program is a program that enables a computer that can access a terminal storage unit that stores pieces of gas information as of two or more points in time to function as: a terminal acquisition unit that acquires gas information that is information that includes gas use information regarding use of gas in an LPG cylinder and corresponds to a cylinder identifier that identifies an LPG cylinder; a terminal accumulation unit that accumulates the gas information acquired by the terminal acquisition unit, in the terminal storage unit; a terminal transmission unit that, when a predetermined condition is satisfied, transmits the pieces gas information as of the two or more pints in time stored in the terminal storage unit to the information processing apparatus in association with a customer identifier.

The software that realizes the information processing apparatus A2 in the present embodiment is the program described below. That is to say, this program is a program that enables a computer that can access a gas storage unit that stores two or more pieces of gas information in association with time information that specifies time, and with a customer identifier, to function as: a gas information reception unit that receives gas information that is associated with a customer identifier, from a gas information transmission apparatus that includes a terminal acquisition unit that acquires gas information that is information that includes gas use information regarding use of gas in an LPG cylinder and corresponds to a customer identifier, and a terminal transmission unit that transmits the gas information acquired by the terminal acquisition unit to the information processing apparatus; a gas information accumulation unit that accumulates the gas information received by the gas information reception unit, in the gas information storage unit in association with time information, and with a customer identifier; and a processing unit that performs predetermined processing, using two or more pieces of gas information stored in the gas information storage unit.

### Embodiment 2

The present embodiment describes an information system that includes an information processing apparatus that outputs information regarding the presence in a residence, using gas use information. It is preferable that information regarding the presence in a residence includes presence-in-residence information regarding the degree of presence in a residence. Also, it is preferable that the information processing apparatus outputs presence-in-residence information for each day of the week and each time zone. Information regarding the presence in a residence typically is information regarding the presence of any inhabitant in a residence, in a household.

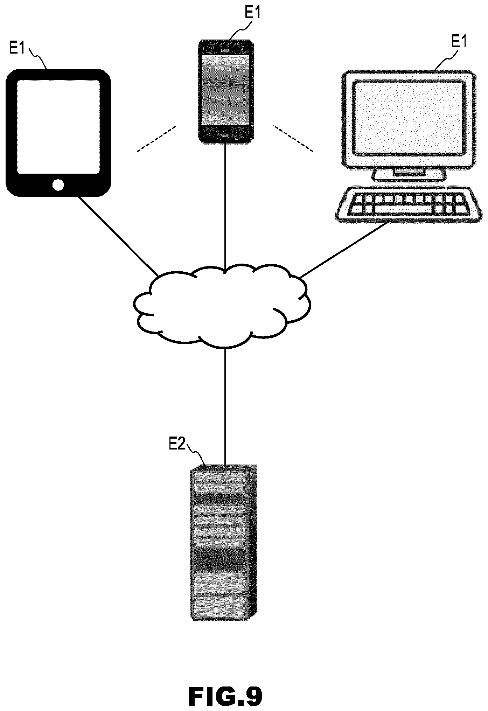

FIG. 9 is a conceptual diagram for an information system E according to the present embodiment. The information system E includes one or more terminal apparatuses E1 and an information processing apparatus E2.

Terminal apparatuses E1 are, for example, terminals that are used by administrators of the information system E, delivery companies, or the like. The terminal apparatuses E1 are, for example, smartphones, tablet terminals, so-called personal computers, or the like, but there is no limitation on the type thereof.

The information processing apparatus E2 is a server apparatus that performs residence stay processing. That is to say, the information processing apparatus E2 is an apparatus that outputs information regarding whether or not an inhabitant is present in a residence. Residence stay processing is processing that is performed to acquire information regarding the presence of any inhabitant in a residence, in a household.

The information processing apparatus E2 can be realized using a so-called cloud server or an ASP server, but there is no limitation on the type thereof. Note that the information processing apparatus E2 may have some or all of the functions of the information processing apparatus A2. That is to say, the information processing apparatus E2 may be an information processing apparatus A2 that performs residence stay processing.

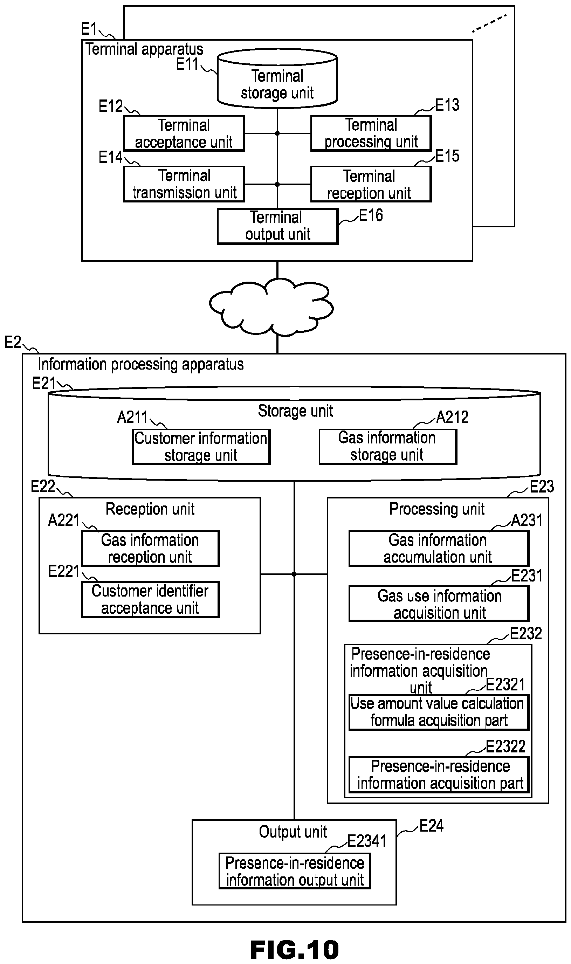

FIG. 10 is a block diagram for the information system E according to the present embodiment.

The terminal apparatuses E1 included in the information system E each include a terminal storage unit E11, a terminal acceptance unit E12, a terminal processing unit E13, a terminal transmission unit E14, a terminal reception unit E15, and a terminal output unit E16.

The information processing apparatus E2 includes a storage unit E21, a reception unit E22, a processing unit E23, and an output unit E24. The storage unit E21 includes the customer information storage unit A211 and the gas information storage unit A212. The reception unit E22 includes the gas information reception unit A221 and a customer identifier acceptance unit E221. The processing unit E23 includes the gas information accumulation unit A231, a gas use information acquisition unit E231, and a presence-in-residence information acquisition unit E232. The presence-in-residence information acquisition unit E232 includes, for example, a use amount value calculation formula acquisition part E2321 and a presence-in-residence information acquisition part E2322. The output unit E24 includes a presence-in-residence information output unit E2341.

The terminal storage unit E11 included in each terminal apparatus E1 stores various kinds of information. Examples of the various kinds of information include a customer identifier and a terminal identifier that identifiers the terminal apparatus E1. Note that the customer identifier is the identifier of a target customer from which presence-in-residence information, which will be described later, is to be acquired.

The terminal acceptance unit E12 accepts various kinds of information, instructions, and so on. Examples of the various kinds of information, instructions, and so on include a customer identifier and a presence-in-residence information output instruction. A presence-in-residence information output instruction is an instruction to output presence-in-residence information. The presence-in-residence information output instruction may or may not contain a customer identifier. A presence-in-residence information output instruction that contains a customer identifier is an instruction to output presence-in-residence information regarding the household of the customer that is identified by the customer identifier. A presence-in-residence information output instruction that does not contain a customer identifier is an instruction to output presence-in-residence information regarding the households of customers that are identified by one or more customer identifiers that are under control.

Any input means may be employed to input various kinds of information, instructions, and so on, such as a touch panel, a keyboard, a mouse, a menu screen, or the like. The terminal acceptance unit E12 can be realized using a device driver for the input means such as a touch panel or a keyboard, or control software or the like for controlling the menu screen.

The terminal processing unit E13 performs various kinds of processing. Examples of the various kinds of processing include processing that is performed by the terminal acceptance unit E12 to convert the various kinds of information, instructions, and so on accepted thereby into a data structure that contains the various kinds of information, instructions, and so on to be transmitted. Examples of the various kinds of processing also include processing that is performed to convert the information received by the terminal reception unit E15 so as to have a data structure that is to be output.

The terminal transmission unit E14 transmits various kinds of information to the information processing apparatus E2. Examples of the various kinds of information include a customer identifier and a presence-in-residence information output instruction.

The terminal reception unit E15 receives various kinds of information. Examples of the various kinds of information include presence-in-residence information.

The terminal output unit E16 outputs various kinds of information. Examples of the various kinds of information include information formed by the terminal processing unit E13. Examples of the various kinds of information include presence-in-residence information.

Here, "output" typically means displaying on a display device, but it is preferable that "output" is regarded as a concept that includes projection with a projector, printing with a printer, sound output, transmission to an external apparatus, accumulation on a recording medium, delivery of processing results to another processing apparatus or another program, and so on.

The storage unit E21 included in the information processing apparatus E2 stores various kinds of information. Examples of the various kinds of information include customer information, gas information, and presence-in-residence information.

The gas information storage unit A212 stores two or more pieces of gas information. Gas information is associated with a customer identifier. The gas information here includes gas use information for two or more days. Also, the gas information here is associated with time information that specifies time. Time information is, for example, time point information that specifies a point in time, time zone information that specifies a time zone, day-of-week information that specifies the day of the week, and date information that specifies a date.

Time information contains time zone information and day-of-week information, for example. That is to say, it is preferable that the gas information storage unit A212 stores two or more pieces of gas information that contain gas use information for each day of the week and each time zone, for two or more weeks. It is preferable that the above time zone is 1 hour (for example, "1 o'clock to 2 o'clock", "2 o'clock to 3 o'clock", etc.), but may be 2 hours, 3 hours, 4 hours, or the like.

The reception unit E22 receives various kinds of information. Examples of the various kinds of information include a customer identifier and a presence-in-residence information output instruction. The reception unit E22 receives a customer identifier or a presence-in-residence information output instruction from a terminal apparatus E1, for example.

The gas information reception unit A221 typically receives gas information from a gas information transmission apparatus A1. However, the gas information reception unit A221 may receive gas information from a server (not shown).

The customer identifier acceptance unit E221 accepts a customer identifier. The customer identifier acceptance unit E221 may accept a presence-in-residence information output instruction that includes a customer identifier.

Here, "acceptance" typically means reception from a terminal apparatus E1, but may be regarded as a concept that includes acceptance of information input from an input device such as a keyboard, a mouse, or a touch panel, or acceptance of information read from a recording medium such as an optical disk, a magnetic disk, or a semiconductor memory.

Acceptance of a customer identifier by the customer identifier acceptance unit E221 may be acquisition of a customer identifier. That is to say, acceptance of a customer identifier by the customer identifier acceptance unit E221 may be reading out of a customer identifier from the customer information storage unit A211.

The terminal processing unit E23 performs various kinds of processing. Examples of the various kinds of processing include processing that is performed by the gas information accumulation unit A231, processing that is performed by the gas use information acquisition unit E231, and processing that is performed by the presence-in-residence information acquisition unit E232.

The gas use information acquisition unit E231 acquires pieces of gas use information as of two or more points in time, paired with one or more customer identifiers, from the gas information storage unit A212. Note that the one or more customer identifiers are, for example, customer identifier accepted by the customer identifier acceptance unit E221.

The gas use information acquisition unit E231 acquires the target gas use information from the gas information storage unit A212, for example. Target gas use information is gas use information that is paired with one or more customer identifiers. Target gas use information is gas use information for each target period. The target period is a day of the week, or a time zone, or a day of the week and a time zone, and is a period corresponding to the presence-in-residence information to be output. Note that the one or more customer identifiers are, for example, customer identifier accepted by the customer identifier acceptance unit E221.

The presence-in-residence information acquisition unit E232 acquires pieces of presence-in-residence information of households that are identified by one or more customer identifiers, using the pieces of gas use information as of two or more points in time acquired by the gas use information acquisition unit E231. Note that the one or more customer identifiers are, for example, customer identifier accepted by the customer identifier acceptance unit E221. In addition, when the amount of use indicated by the gas use information is large, compared to when the amount is small, the presence-in-residence information acquisition unit E232 typically acquires presence-in-residence information that indicates the presence in a residence (for example, a high presence-in-residence score, a high presence-in-residence probability, or prediction information indicating the presence in the residence).

Presence-in-residence information is information regarding whether or not a person belonging to a household is present in their residence. Presence-in-residence information is, for example, information that specifies a presence-in-residence score, or information indicating whether or not the inhabitant is in their residence. A presence-in-residence score is information regarding the degree of presence in a residence. A presence-in-residence score is, for example, a presence-in-residence probability. A presence-in-residence score is, for example, any of the five levels from "1" to "5", any of "A", "B", and "C", a probability from "0%" to "100%", or the like. When the presence-in-residence score is any of the five levels, for example, it is preferable that "5" indicates that the inhabitant is most likely to be present in the residence, and "1" indicates that the inhabitant is least likely to be present in the residence, or vice versa. When the presence-in-residence score is any of "A", "B", and "C", for example, it is preferable that "A" indicates that the inhabitant is most likely to be present in the residence, and "C" indicates that the inhabitant is least likely to be present in the residence, or vice versa. Note that presence-in-residence information may be, for example, information indicating whether or not the residence is vacant.

The presence-in-residence information acquisition unit E232 acquires presence-in-residence information according to the amount of gas used indicated by gas use information per unit time for two or more days, using the pieces of gas use information as of two or more points in time acquired by the gas use information acquisition unit E231, for example.

The presence-in-residence information acquisition unit E232 acquires presence-in-residence information that indicates a stay probability of the inhabitant for each target period, using the target gas use information acquired by the gas use information acquisition unit E231, for example.

Using the pieces of gas use information as of two or more points in time acquired by the gas use information acquisition unit E231, the presence-in-residence information acquisition unit E232 determines that the inhabitant is present in the residence in a time zone in which the amount of gas used indicated by the pieces of gas use information regarding each of the two or more days is large enough to satisfy a predetermined condition, determines that the inhabitant is not present in the residence in a time zone in which the amount of gas used indicated by the pieces of gas use information regarding each of the two or more days is small enough to satisfy a predetermined condition, and acquires presence-in-residence information that is a stay determination result that is the result of determination.

It is preferable that the presence-in-residence information acquisition unit E232 acquires presence-in-residence information for each day of the week and each time zone by using the gas use information for each day of the week and each time zone.

More specifically, the presence-in-residence information acquisition unit E232 acquires presence-in-residence information, using one of the following two algorithms. The first case is when machine learning is not used. The second case is when machine learning is used.

### (1) When Machine Learning is Not Used

### (1-1) When Calculation Formula is Used

The presence-in-residence information acquisition unit E232 acquires the average value of the gas use amount for each day of the week and each time zone, using, for example, two or more pieces of gas use information for each day of the week and each time zone.

Next, the presence-in-residence information acquisition unit E232 calculates presence-in-residence information, which is the probability of the presence in the residence, using, for example, an increasing function that employs the average value of the amount of gas used, as a parameter.

### (1-2) When Correspondence Table is Used

First, it is assumed that the storage unit E21 stores a correspondence table that contains two or more pieces of correspondence information indicating the correspondence between "information regarding the range of the amount of gas used" and "information indicating the probability of the presence in the residence".

Note that correspondence information is information included in the correspondence table, and indicates, for example, "0 <= the amount of use per unit time <x1 | 30%", "x1 <= the amount of use per unit time <x2 | 40%", "x2 <= the amount of use per unit time <x3 | 50%", ..., "x4 <= the amount of use per unit time <x5 | 70%", ..., and so on.

In such a situation, the presence-in-residence information acquisition unit E232 acquires the average value of the gas use amount for each day of the week and each time zone, using, for example, two or more pieces of gas use information for each day of the week and each time zone.

Next, the presence-in-residence information acquisition unit E232 determines, for example, "information regarding the range of the amount of gas used" corresponding to the average of the amount of gas used, and acquires, for each day of the week and each time zone, "information indicating the probability of the presence in the residence" that is paired with the "information regarding the range of the amount of gas used".

### (1-3) When Use Amount Value Calculation Formula is Used

When a use amount value calculation formula is used is when the use amount value calculation formula acquisition part E2321 and the presence-in-residence information acquisition part E2322 are used.

First, the presence-in-residence information acquisition unit E232 acquires the average value of the gas use amount for each day of the week and each time zone, using, for example, two or more pieces of gas use information for each day of the week and each time zone.

Thereafter, the use amount value calculation formula acquisition part E2321 acquires a use amount value calculation formula that is a use amount value calculation formula that is a calculation formula for calculating information regarding the amount of gas used, using the acquired pieces of gas use information as of two or more points in time. Here, information regarding the amount of gas used may be the amount of gas used per unit time, or a cumulative amount of gas used. The use amount value calculation formula may include two or more calculation formulas. The use amount value calculation formula includes, for example, two or more calculation formulas for specific time zones. Examples of the use amount value calculation formulas include a linear unit-time calculation formula associated with an identifier that identifies the time.

The use amount value calculation formula acquisition part E2321 acquires a use amount value calculation formula for each customer identifier, for example. The use amount value calculation formula acquisition part E2321 acquires, from the gas information storage unit A212, gas use amount information that is the amount of gas used per unit time, contained in the gas use information paired with a customer identifier, and that is gas use amount information regarding a processing-target period (for example, the month of interest in the last year (for example, March 2018)), for example. Next, the use amount value calculation formula acquisition part E2321 calculates the average value of gas use amount information for each time zone in the processing-target period (average amount of gas used in each time zone), using a plurality of pieces of gas use amount information per unit time for each time zone (for example, 0:00 to 1:00, ..., 6:00 to 7:00, 7:00 to 8:00, ..., 12:00 to 13:00, ..., 17:00 to 18:00, 18:00 to 19:00, ..., 23:00 to 24:00), for example.

Thereafter, the use amount value calculation formula acquisition part E2321 acquires a calculation formula that expresses a graph that has the time zone as the horizontal axis and the average value of gas use information as the vertical axis, and is composed of a set of linear expressions with the average value of each time zone as the passing coordinates. Note that the use amount value calculation formula in such a case is a calculation formula that expresses a so-called bathtub curve.

Note that the use amount value calculation formula acquisition part E2321 may acquire, for example, one approximate calculation formula that passes through the average value, using the average value in each time zone.

Also, the usage value calculation formula acquisition part E2321 may calculate, for example, the cumulative value in each time zone of the average value in each time zone, and acquires a calculation formula that expresses a graph that has the time zone as the horizontal axis and the cumulative value as the vertical axis. That is to say, the use amount value calculation formula acquisition part E2321 need only acquire a calculation formula for calculating the amount of gas to be used in the future, using the gas use amount information in the past.

It is preferable that the use amount value calculation formula acquisition part E2321 acquire a calculation formula for each customer identifier, each day, each week, each month, and each year.

Next, the presence-in-residence information acquisition part E2322 acquires presence-in-residence information, using a use amount value calculation formula that is a use amount value calculation formula acquired by the use amount value calculation formula acquisition part E2321 and is a use amount value calculation formula for the target time zone for which presence-in-residence information is to be acquired.

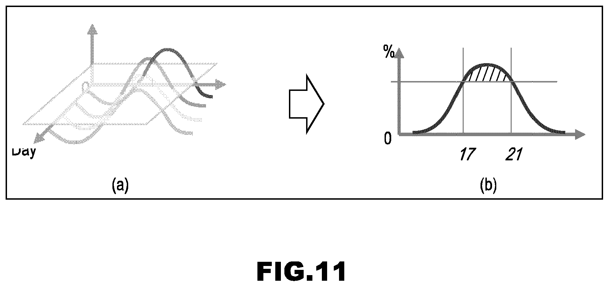

That is to say, the presence-in-residence information acquisition part E2322 acquires presence-in-residence information regarding a time zone (here, from 17:00 to 21:00) at a rate that is no less than a threshold value including the time of the maximum use amount (here, for example, 70%) is acquired as, for example, "the presence-in-residence probability 70%" or "a high possibility of the presence in the residence", using, for example, a graph showing the amount of gas used for each time zone (for example, FIG. 11(b)), which can be acquired from the use value calculation formula acquired by the use amount value calculation formula acquisition part E2321. Note that FIG. 11(a) is a graph showing gas use information for each time zone of two or more days.

### (2) When Machine Learning is Used.

### (2-1) Processing performed to form a leaner

For example, the reception unit E22 receives a customer identifier and a presence-in-residence flag from a terminal (not shown) or a server (not shown) of a delivery company. Thereafter, the processing unit E23 accumulates source information in which a customer identifier, a presence-in-residence flag, and time information are associated with each other, in the storage unit E21. Note that a presence-in-residence flag is information indicating whether or not the inhabitant is present in the residence. Time information may be acquired from a terminal or a server of a delivery company or may be acquired by the processing unit E23 from a clock (not shown). In addition, time information may be time point information or time zone information. Furthermore, it is preferable that pieces of source information contain both a piece of source information (positive example) in which a customer identifier and a presence-in-residence flag that indicates the presence in a residence are associated with each other, and a piece of source information (negative example) in which a customer identifier and a presence-in-residence flag that indicates the absence in the residence are associated with each other. However, only a positive example may be contained. In the case where only a positive example is contained, source information need not contain a presence-in-residence flag.

Next, the processing unit E23 acquires the gas use information corresponding to the customer identifier and time information contained in the source information, from the gas information storage unit A212. Thereafter, the processing unit E23 acquires a plurality of sets each consisting of a piece of gas use information and a presence-in-residence flag contained in the source information, and provides the plurality of sets to the module for forming a learner for machine learning to form a learner, and accumulates it in the storage unit E21, for example. Note that there is no limitation on the machine learning algorithm, which may be, for example, deep learning, random forest, SVR, or the like. In addition, the machine learning module may be any module, such as a TensorFlow module, fastText, TinySvm, any kind of RandomForest function, or the like. The learner may be referred to as a classifier. Such a learner is a learner to which gas use information is input and that outputs a presence-in-residence flag.

### (2-2) Presence-in-residence Information Acquisition Processing

The presence-in-residence information acquisition unit E232 acquires presence-in-residence information, using the pieces of gas use information as of two or more points in time acquired by the gas use information acquisition unit E231, and the learner in the storage unit E21, according to a machine learning algorithm. That is to say, for example, the presence-in-residence information acquisition unit E232 forms a vector that has gas use information as of two or more points, acquired by the gas use information acquisition unit E231, as an element, provides the vector and the learner in the storage unit E21 to the module that performs machine learning prediction, and acquires presence-in-residence information, using a machine learning algorithm. Note that there is no limitation on the machine learning algorithm in the case of such prediction as well, which may be, for example, deep learning, random forest, SVM, or the like. In addition, the machine learning module for prediction may be any module, such as a TensorFlow module, fastText, TinySvm, any kind of RandomForest function, or the like. Note that the "prediction" here means processing through which presence-in-residence information is acquired. Note that, when the machine learning module for prediction outputs a score as well, the score can be a presence-in-residence score. Furthermore, it may be considered that, if the score is normalized to a numerical value from 0 to 1, for example, the probability of the presence in a residence can be obtained.

The presence-in-residence information acquisition unit E232 may acquire presence-in-residence information that indicates whether or not the residence of the household identified by a customer identifier is vacant, using pieces of gas use information as of two or more points in time, for example. That is to say, for example, when the amount of gas used indicated by the pieces of gas use information as of two or more points in time is 0 or no greater than a threshold value or less than the threshold value for no shorter than a predetermined period or longer than the predetermined period, the presence-in-residence information acquisition unit E232 may determine that the household is vacant (the inhabitant is absent for a long period), and acquire presence-in-residence information that indicates whether or not the household is vacant.

The output unit E24 outputs various kinds of information. Examples of the various kinds of information include presence-in-residence information. In addition, here, "output" means transmission to the terminal apparatuses E1, for example. Also, "output" may be, for example, display on a display device or the like, accumulation on a recording medium, or the like.

The presence-in-residence information output unit E2341 outputs the presence-in-residence information acquired by the presence-in-residence information acquisition unit E232. Here, "output" means transmission to the terminal apparatuses E1, for example.

It is preferable that the presence-in-residence information output unit E2341 outputs presence-in-residence information for each day of the week and each time zone.

It is preferable that the terminal storage unit E11, the storage unit E21, the customer information storage unit A211, and the gas information storage unit A212 are realized using a non-volatile recording medium, but they may be realized using a volatile recording medium.

There is no limitation on the process in which information is stored in the terminal storage unit E11 and so on. For example, information may be stored in the terminal storage unit E11 or the like via a recording medium, or information transmitted via a communication line or the like may be stored in the terminal storage unit E11 or the like, or information input via an input device may be stored in the terminal storage unit E11 or the like.

The terminal processing unit E13, the processing unit E23, the gas information accumulation unit A231, the gas use information acquisition unit E231, the presence-in-residence information acquisition unit E232, the use amount value calculation formula acquisition part E2321, and the presence-in-residence information acquisition part E2322 can typically be realized using an MPU, a memory, or the like. The processing procedures performed by the terminal processing unit E13 and so on typically are realized using software, and the software is recorded on a recording medium such as a ROM. However, such processing procedures may be realized using hardware (a dedicated circuit).

The terminal transmission unit E14, the output unit E24, and the presence-in-residence information output unit E2341 typically are realized using a wireless or wired communication means, but may be realized using a broadcast means.

The terminal reception unit E15, the reception unit E22, the gas information reception unit A221, and the customer identifier acceptance unit E221 typically are realized using a wireless or wired communication means, but may be realized using a means for receiving broadcast.

The terminal output unit E16 may be regarded as including or not including an output device such as a display or a speaker. The terminal output unit E16 can be realized using the driver software of the output device, the driver software of the output device and the output device, or the like.

Next, operations that are performed by the information system E will be described. First, operations performed by the terminal apparatuses E1 will be described.

The terminal acceptance unit E12 of each terminal apparatus E1 accepts a presence-in-residence information output instruction, for example. Next, the terminal processing unit E13 forms a presence-in-residence information instruction that is to be transmitted. Next, the terminal transmission unit E14 transmits the formed presence-in-residence information output instruction to the information processing apparatus E2. Next, the terminal reception unit E15 receives presence-in-residence information, in response to the transmission of the presence-in-residence information output instruction, for example. Thereafter, the terminal processing unit E13 forms presence-in-residence information that is to be output, using the received presence-in-residence information. Next, the terminal output unit E16 outputs presence-in-residence information.

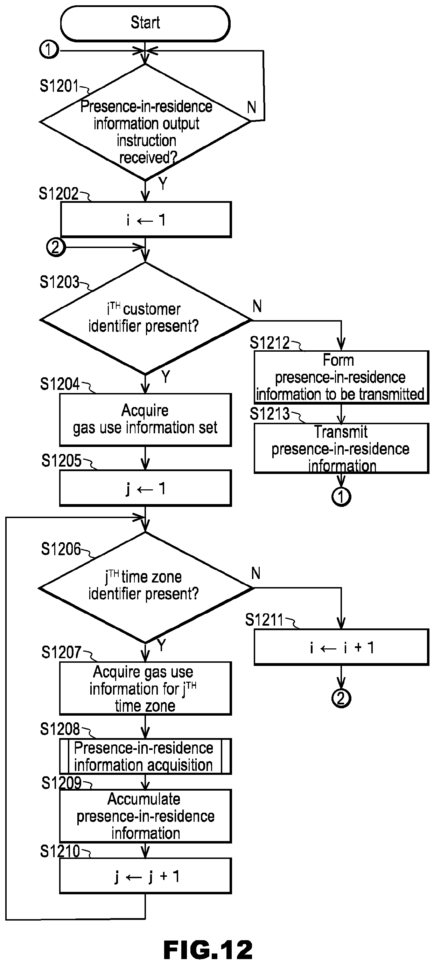

Next, an example of presence-in-residence information acquisition processing that is performed by the information processing apparatus E2 will be described with reference to the flowchart shown in FIG. 12. Note that presence-in-residence information acquisition processing may also be referred to as residence stay processing.

(Step S1201) The customer identifier acceptance unit E221 determines whether or not a presence-in-residence information output instruction has been received from a terminal apparatus E1. If a presence-in-residence information output instruction has been received, processing proceeds to Step S1202, and if a presence-in-residence information output instruction has not been received, processing returns to Step S1201.

(Step S1202) The presence-in-residence information acquisition unit E232 substitutes 1 for the counter i.

(Step S1203) The presence-in-residence information acquisition unit E232 determines whether or not the i^{th} customer identifier of the target from which presence-in-residence information is to be acquired is present. If the i^{th} customer identifier is present, processing proceeds to Step S1204, and if the i^{th} customer identifier is not present, processing proceeds to Step S1212. Note that the i^{th} customer identifier of the target from which presence-in-residence information is to be acquired is the i^{th} customer included in a presence-in-residence information output instruction, or the i^{th} customer in the customer information storage unit A211, for example.

(Step S1204) The presence-in-residence information acquisition unit E232 acquires a set of pieces of gas use information paired with the i^{th} customer identifier from the gas information storage unit A212.

(Step S1205) The presence-in-residence information acquisition unit E232 substitutes 1 for a counter j.

(Step S1206) The presence-in-residence information acquisition unit E232 determines whether or not the j^{th} customer identifier of the target from which presence-in-residence information is to be acquired is present. If the j^{th} customer identifier is present, processing proceeds to Step S1207, and if the j^{th} customer identifier is not present, processing proceeds to Step S1211.

(Step S1207) The presence-in-residence information acquisition unit E232 references the time identifiers paired with the pieces of gas use information, of the set of pieces of gas use information acquired in Step S1204, and acquires one or more pieces of gas use information regarding the time zone identified by the j^{th} time zone identifier.

(Step S1208) The presence-in-residence information acquisition unit E232 acquires presence-in-residence information, using the one or more pieces of gas use information acquired in Step S1207. An example of presence-in-residence information acquisition processing will be described with reference to the flowcharts shown in FIGS. 38 and 39.

(Step S1209) The presence-in-residence information acquisition unit E232 at least temporarily accumulates the presence-in-residence information acquired in Step S1208, in association with the i^{th} customer identifier and the j^{th} time zone identifier.

(Step S1210) The presence-in-residence information acquisition unit E232 increments the counter j by 1. Processing returns to step 3706.

(Step S1211) The presence-in-residence information acquisition unit E232 increments the counter i by 1. Processing returns to step 3703.

(Step S1212) The presence-in-residence information acquisition unit E232 forms presence-in-residence information that is to be transmitted, using the presence-in-residence information accumulated in Step S1209. The presence-in-residence information to be transmitted contain, for example, one or more sets each consisting of a customer name paired with a customer identifier, a time zone, and presence-in-residence information (for example, a presence-in-residence probability).

(Step S1213) The presence-in-residence information output unit E2341 transmits the presence-in-residence information formed in Step S1212 to the terminal apparatuses E1. Processing returns to Step S1201.

In the flowchart shown in FIG. 12, processing is terminated when power is turned off or an interruption is made to terminate the processing.

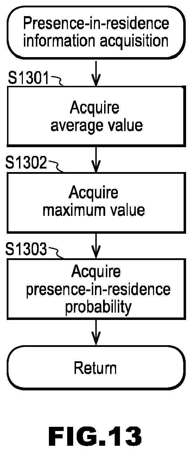

Next, a first example of the presence-in-residence information acquisition processing in Step S1208 will be described with reference to the flowchart shown in FIG. 13.

(Step S1301) The presence-in-residence information acquisition unit E232 calculates the average value of the amount of gas used indicated by two or more pieces of gas use information for the time zone identified by the j^{th} time zone identifier.

(Step S1302) The presence-in-residence information acquisition unit E232 acquires gas use information that indicates the maximum amount of use per unit time (for example, one hour) of the pieces of gas use information paired with the target customer identifier. Note that unit time is the same time as the time zone identified by the time zone identifier.

(Step S1303) The presence-in-residence information acquisition unit E232 acquires a presence-in-residence probability, using the average value of the amounts of gas used acquired in Step S1301, and gas use information indicating the maximum amount of use acquired in Step S1302. Processing returns to higher level processing.

Note that the presence-in-residence information acquisition unit E232 acquires a higher presence-in-residence probability as the average value of the amounts of gas used acquired in Step S1301 is higher. It is preferable that the presence-in-residence information acquisition unit E232 acquires a lower presence-in-residence probability as the gas use information indicating the maximum amount of use is higher. The presence-in-residence information acquisition unit E232 may use, for example, a function that employs the average value of the amounts of use and gas use information that indicates the maximum amount of use as parameters, to calculate a presence-in-residence probability. In addition, the presence-in-residence information acquisition unit E232 may acquire, for example, the presence-in-residence probability corresponding to the average value of the amounts of use and gas use information that indicates the maximum amount of use, from a correspondence table.

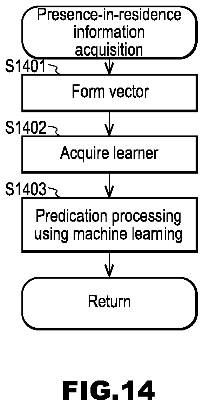

Next, a second example of the presence-in-residence information acquisition processing in Step S1208 will be described with reference to the flowchart shown in FIG. 14. The second example is when machine learning is used.

(Step S1401) The presence-in-residence information acquisition unit E232 forms a vector that has, as an element, the amount of gas used indicated by two or more pieces of gas use information for the time zone identified by the j^{th} time zone identifier.

(Step S1402) The presence-in-residence information acquisition unit E232 acquires the prestored learner from the storage unit E21.

(Step S1403) The presence-in-residence information acquisition unit E232 provides the vector formed in Step S1401 and the learner acquired in Step S1402 to the module that performs machine learning prediction processing, and acquires the result. Note that the result of prediction may be a presence-in-residence score, or information that indicate whether or not the inhabitant is present in the residence ("0" or "1").

As described above, according to the present embodiment, it is possible to acquire presence-in-residence information regarding the presence in the residence of an inhabitant, based on LPG use status.

Furthermore, according to the present embodiment, it is possible to acquire a presence-in-residence score, which is a score regarding the presence in the residence of an inhabitant, and a stay probability, which is a presence-in-residence probability, based on the LPG use status, and therefore it is possible to accurately and precisely grasp the inhabitant's stay status based on the LPG use status.

Note that the processing in the present embodiment may be realized using software. This software may be distributed through software downloading or the like. Also, this software may be recorded on a recording medium such as a CD-ROM and distributed. Note that the same applies to the other embodiments in the present description. The software that realizes the information processing apparatus E2 in the present embodiment is the program described below. That is to say, this program is a program that enables a computer that can access a gas information terminal storage unit that stores two or more pieces of gas information that include gas use information that is gas use information for two or more days and is associated with time information that specifies a time, in association with a customer identifier that identifies a customer, to function as: a customer identifier acceptance unit that accepts a customer identifier; a gas use information acquisition unit that acquires pieces of gas use information as of two or more points in time, paired with the customer identifier accepted by the customer identifier acceptance unit, from the gas information storage unit; a presence-in-residence information acquisition unit that acquires presence-in-residence information regarding whether or not an inhabitant in a household that is identified by the customer identifier accepted by the customer identifier acceptance unit is present in the residence, using the pieces of gas use information as of two or more points in time acquired by the gas use information acquisition unit; and a presence-in-residence information output unit that outputs the presence-in-residence information acquired by the presence-in-residence information acquisition unit.

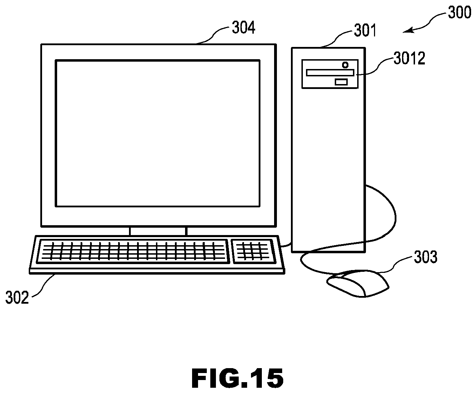

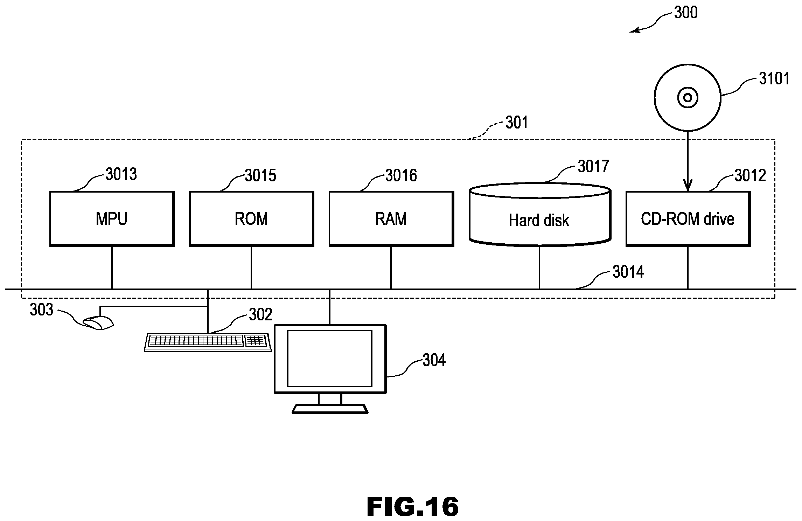

FIG. 15 shows an external appearance of a computer that realizes the information processing apparatus E2 and so on according to the various embodiments described above by executing the programs described in the present description. The above-described embodiments can be realized using computer hardware and a computer program that is executed thereon. FIG. 15 is an overview diagram for this computer system 300, and FIG. 16 is a block diagram for the system 300.

In FIG. 15, the computer system 300 includes a computer 301 that includes a CD-ROM drive, a keyboard 302, a mouse 303, and a monitor 304.

In FIG. 16, the computer 301 includes, in addition to a CD-ROM drive 3012, an MPU 3013, a bus 3014 that is connected to the CD-ROM drive 3012 and so on, a ROM 3015 for storing programs such as a bootup program, a RAM 3016 that is connected to the MPU 3013 to temporarily store an instruction from an application program, and provide a temporary memory space, and a hard disk 3017 for storing an application program, a system program, and data. Although not illustrated here, the computer 301 may further include a network card that provides connection to a LAN.

The program that causes the computer system 300 to execute the functions of the information processing apparatus B2 and so on according to the above-described embodiments may be stored in a CD-ROM 3101, inserted into the CD-ROM drive 3012, and further transferred to the hard disk 3017. Instead, the program may be transmitted to the computer 301 via a network (not shown), and stored in the hard disk 3017. The program is loaded to the RAM 3016 when it is to be executed. The program may be loaded directly from the CD-ROM 3101 or a network.

The program does not necessarily include an operating system (OS) that causes the computer 301 to execute functions such as the information processing apparatus E2 according to the above-described embodiments, a third-party program, or the like. The program need only include an instruction part that calls an appropriate function (module) in a controlled manner to obtain the desired result. It is well known how the computer system 300 works, and therefore detailed description thereof will be omitted.

A single computer or a plurality of computers may execute the above-described program. That is to say, centralized processing or distributed processing may be performed.

Also, as a matter of course, in each of the above-described embodiments, the two or more communication means that exist in one apparatus may be physically realized using one medium.

Furthermore, in each of the above-described embodiments, each kind of processing may be realized through centralized processing that is performed by a single apparatus, or may be realized through distributed processing that is performed by a plurality of apparatuses.

The present invention is not limited to the above-described embodiments, and various modifications can be made. Such modifications are also included in the scope of the present invention as a matter of course.

### Industrial Applicability

As described above, the information processing apparatus according to the present invention achieves the effect of acquiring presence-in-residence information regarding the presence of an inhabitant in the residence, using an LPG use status, and is useful as, for example, a server apparatus that supports delivery companies.

## Claims

1. An information processing apparatus comprising:
a gas information storage unit that stores two or more pieces of gas information that include gas use information that is gas use information for two or more days and is associated with time information that specifies a time, in association with a customer identifier that identifies a customer;
a customer identifier acceptance unit that accepts a customer identifier;
a gas use information acquisition unit that acquires pieces of gas use information as of two or more points in time, paired with the customer identifier accepted by the customer identifier acceptance unit, from the gas information storage unit;
a presence-in-residence information acquisition unit that acquires presence-in-residence information regarding whether or not an inhabitant in a household that is identified by the customer identifier accepted by the customer identifier acceptance unit is present in the residence, using the pieces of gas use information as of two or more points in time acquired by the gas use information acquisition unit; and
a presence-in-residence information output unit that outputs the presence-in-residence information acquired by the presence-in-residence information acquisition unit.

2. The information processing apparatus according to claim 1,
wherein the presence-in-residence information acquisition unit acquires presence-in-residence information that is a presence-in-residence score regarding the degree of presence in a residence, using the pieces of gas use information as of two or more points in time acquired by the gas use information acquisition unit, according to an amount of gas used indicated by gas use information per unit time for two or more days.

3. The information processing apparatus according to claim 2,
wherein the gas use information acquisition unit acquires, from the gas information storage unit, target gas use information that is gas use information that is paired with the customer identifier accepted by the customer identifier acceptance unit, and is gas use information for each target period that is a day of the week, or a time zone, or a day of the week and a time zone for which presence-in-residence information is to be output, and
the presence-in-residence information acquisition unit acquires presence-in-residence information that indicates a stay probability of an inhabitant for each target period, using the target gas use information acquired by the gas use information acquisition unit.

4. The information processing apparatus according to claim 1,
wherein, using the pieces of gas use information as of two or more points in time acquired by the gas use information acquisition unit, the presence-in-residence information acquisition unit determines that the inhabitant is present in the residence in a time zone in which the amount of gas used indicated by the pieces of gas use information regarding each of the two or more days is large enough to satisfy a predetermined condition, determines that the inhabitant is not present in the residence in a time zone in which the amount of gas used indicated by the pieces of gas use information regarding each of the two or more days is small enough to satisfy a predetermined condition, and acquires presence-in-residence information that is a stay determination result that is the result of determination.

5. The information processing apparatus according to any one of claims 1 to 4,
wherein the gas information storage unit stores two or more pieces of gas information that contain gas use information for each day of the week and each time zone, for two or more weeks,
the presence-in-residence information acquisition unit acquires presence-in-residence information for each day of the week and each time zone, using the gas use information for each day of the week and each time zone, and
the presence-in-residence information output unit outputs presence-in-residence information for each day of the week and each time zone.

6. The information processing apparatus according to any one of claims 1 to 5, further comprising:
a gas information reception unit that receives gas information from a gas information transmission apparatus that includes: a terminal acquisition unit that acquires gas information that is information that contains gas use information regarding use of gas in an LPG cylinder and corresponds to a customer identifier; and a terminal transmission unit that transmits the gas information acquired by the terminal acquisition unit to the information processing apparatus; and
a gas information accumulation unit that accumulates the gas information received by the gas information reception unit, in the gas information storage unit, in association with the time information and the customer identifier.

7. An information processing method that is realized using: a gas information storage unit that stores two or more pieces of gas information that include gas use information that is gas use information for two or more days and is associated with time information that specifies a time, in association with a customer identifier that identifies a customer; a customer identifier acceptance unit; a gas use information acquisition unit; a presence-in-residence information acquisition unit; and a presence-in-residence information output unit, the information processing method comprising:
a customer identifier acceptance step in which the customer identifier acceptance unit accepts a customer identifier;
a gas use information acquisition step in which the gas use information acquisition unit acquires pieces of gas use information as of two or more points in time, paired with the customer identifier accepted in the customer identifier acceptance step, from the gas information storage unit;
a presence-in-residence information acquisition step in which the presence-in-residence information acquisition unit acquires presence-in-residence information regarding whether or not an inhabitant in a household that is identified by the customer identifier accepted in the customer identifier acceptance step is present in the residence, using the pieces of gas use information as of two or more points in time acquired in the gas use information acquisition step; and
a presence-in-residence information output step in which the presence-in-residence information output unit outputs the presence-in-residence information acquired in the presence-in-residence information acquisition step.

8. A program for enabling a computer that can access a gas information storage unit that stores two or more pieces of gas information that include gas use information that is gas use information for two or more days and is associated with time information that specifies a time, in association with a customer identifier that identifies a customer, to function as:
a customer identifier acceptance unit that accepts a customer identifier;
a gas use information acquisition unit that acquires pieces of gas use information as of two or more points in time, paired with the customer identifier accepted by the customer identifier acceptance unit, from the gas information storage unit;
a presence-in-residence information acquisition unit that acquires presence-in-residence information regarding whether or not an inhabitant in a household that is identified by the customer identifier accepted by the customer identifier acceptance unit is present in the residence, using the pieces of gas use information as of two or more points in time acquired by the gas use information acquisition unit; and
a presence-in-residence information output unit that outputs the presence-in-residence information acquired by the presence-in-residence information acquisition unit.
